# EUROPEAN PATENT APPLICATION

(11) **EP 4 845 021 A2**
(43) Date of publication of application: **25.11.2026**
(21) Application number: 26210627.1
(22) Date of filing: 10.11.2017
(51) Int. Cl.: H02P 21/00

(54) **CONFIGURABLE MOTOR SYSTEM**

(30) Priority: 11.11.2016 US 201662420986 P; 08.11.2017 US 201715806426
(62) Document number(s) of the earlier application(s) in accordance with Art. 76 EPC: 21199218.5 / 3 955 454; 17201186.8 / 3 322 086
(71) Applicant: Black & Decker, Inc., New Britain, CT 06053 (US)
(72) Inventor: PUZIO, Daniel, Baltimore 21234 (US); BISER, Joseph Carl, Parkville 21234 (US); KUSMIERSKI, Robert G, York 17403 (US); PETRUS, Tyler, Baltimore 21211 (US)
(74) Representative: Carpmaels & Ransford LLP

(57) **Abstract**

A configurable motor system comprising: a housing having an electrical power input and an interface receptacle; an electric motor received in the housing; an output shaft rotationally driven by the electric motor; a motor control circuit received in the housing and configured to control power delivery from the electrical power input to the electric motor; and a modular interface configured to be removably coupled to the interface receptacle, the modular interface configured to receive one or more user inputs and to direct the motor control circuit to control power delivery to the electric motor based on the user input and based on pre-programmed instructions corresponding to a tool to which the motor system is attached; wherein it further comprises a mounting bracket coupled to the housing and the mounting bracket includes substantially a same configuration as a mount of an internal combustion engine that the motor system is intended to replace.

## Description

This description relates to a configurable motor system.

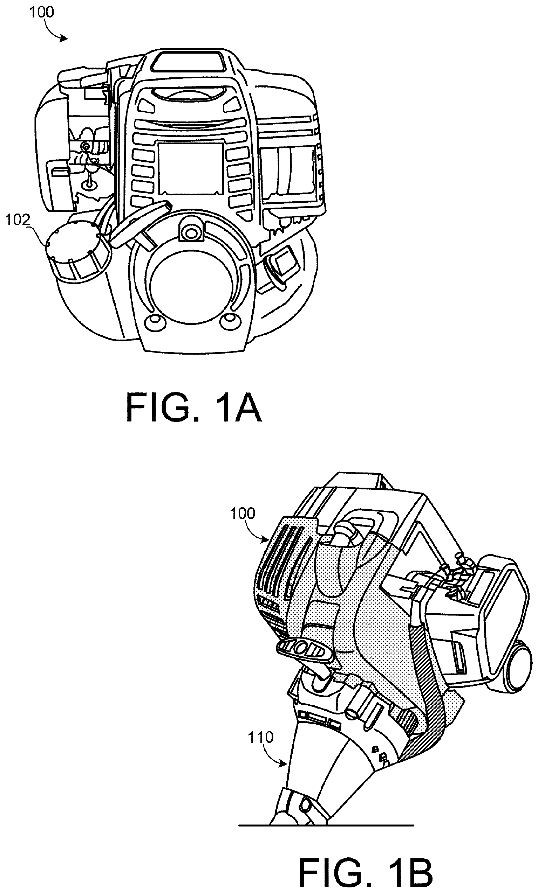

FIG. 1A illustrates a side view of an internal combustion engine (ICE) 100 and FIG. 1B illustrates a perspective view of the internal combustion engine 100 of FIG. 1A coupled to a tool 110. The engine 100 powers the tool 110. The engine 100 includes an output shaft (not shown) that drives rotating components of the tool 110, causing the tool 110 to produce work and perform its designated functions. The engine 100 may have a maximum engine revolutions per minute (RPM), which is a maximum speed at which the engine can operate. In an example in which the engine 100 is a four-stroke ICE, the maximum engine RPM may be 8000RPM. The engine 100 includes or is coupled to a fuel tank 102 that provides a reservoir of fuel (e.g., gasoline) for powering the engine 100.

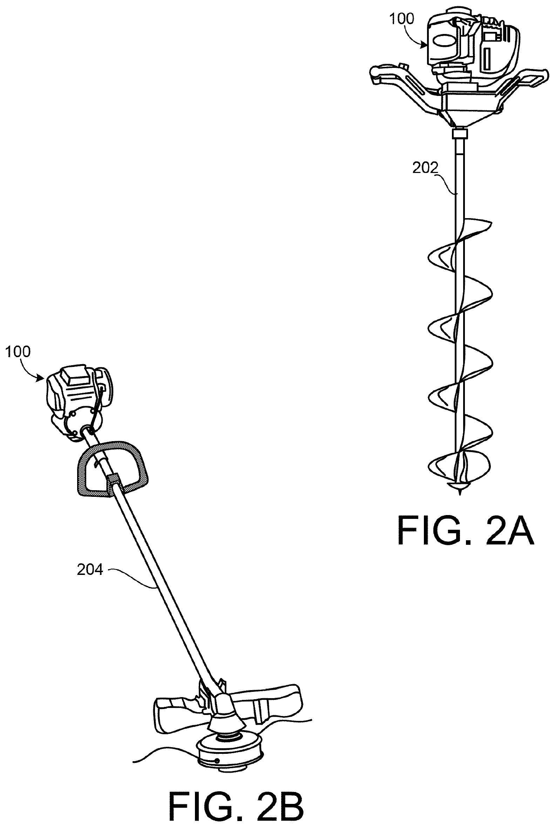

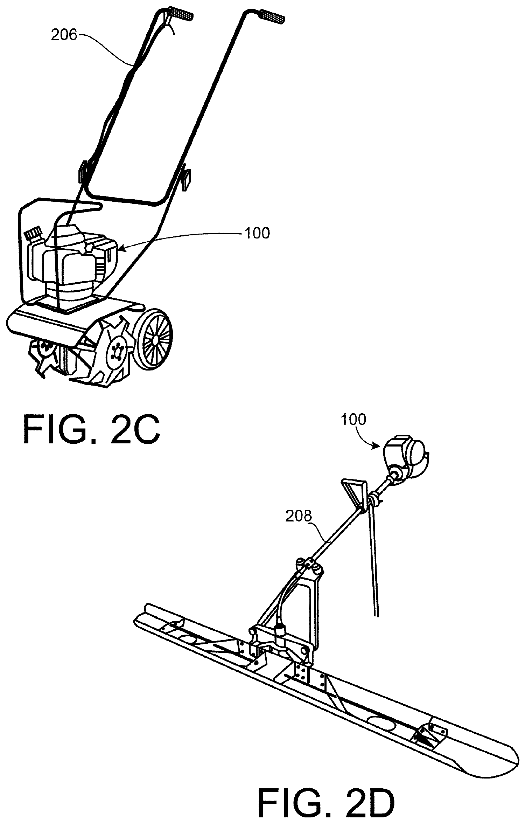

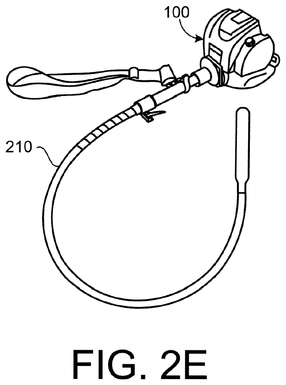

Many tools, including those illustrated in FIGS. 2A-2E, may be powered by the internal combustion engine 100 of FIG. 1A. In each example, the engine 100 drives an output shaft that drives rotating components of the respective tool (sometimes via a centrifugal clutch), causing the tool to produce work and perform functions such as rotating blades, rotating an attached mechanism, rotating a head, driving a compressor, driving a pump, and other functions. For example, the internal combustion engine 100 may power a post hole digger 202 of FIG. 2A, a string trimmer 204 of FIG. 2B, a tiller 206 of FIG. 2C, a concrete screed 208 of FIG. 2D and a blower 210 of FIG. 2E. As illustrated, the same engine 100, which is a fuel-powered internal combustion engine (e.g., gasoline-powered), is used on the various different tools. The same engine 100 may be used to power other tools that are not illustrated here. The internal combustion engine 100 typically may be noisy, may require maintenance and needs fuel to operate.

Furthermore, each tool of the illustrated tools receives various types of user inputs to operate the tool, where the user inputs may vary from tool to tool. For example, the tiller 206 of FIG. 2C includes a throttle. The throttle may control an amount of gasoline consumed by the engine 100. By controlling the amount of gasoline consumed by the engine 100, the throttle may control the speed, power, and/or torque generated by the engine 100, which may control the work output of the tiller 206. The other illustrated tools may include other inputs to the engine 100 and/or the tool itself, which may vary from tool to tool.

In an aspect, a configurable motor system includes a housing having an electrical power input and an interface receptacle, an electric motor received in the housing, an output shaft rotationally driven by the electric motor, a motor control circuit received in the housing and configured to control power delivery from the electrical power input to the electric motor and a modular interface configured to be removably coupled to the interface receptacle. The modular interface is configured to receive one or more user inputs and to direct the motor control circuit to control power delivery to the electric motor based on the user input and based on pre-programmed instructions corresponding to a tool to which the motor system is attached.

Implementations may include one or more of the following features. The modular interface may include a user interface.

The modular interface may include control electronics configured to control the motor control circuit.

The modular interface may provide direct input to the motor control circuit.

The modular interface may include a throttle control input configured to be coupled to a throttle cable of a tool.

The modular interface may further include an on/off switch input configured to be coupled to an on-off switch.

The modular interface may include a speed control dial configured to be actuated by a user.

The modular interface may include a forward-reverse switch configured to be actuated by a user and an on-off input configured to be coupled to an on-off switch.

The modular interface may include a display configured to convey information about tool operation to a user.

The modular interface may include a sensor input configured to receive input information from a sensor.

The modular interface may include an on-off input configured to be coupled to a remote ON-OFF switch and throttle displacement input configured to be coupled to a throttle cable of a tool, and the control circuit is configured to turn on power to the electric motor only after the on-off switch has been switched to an ON position and a throttle displacement exceeds a predetermined value.

The modular interface may include an on-off input configured to be coupled to an ON-OFF switch, and the control circuit is configured to provide at least one of a soft start when ON-OFF switch is switched to an ON state and a soft stop the ON-OFF switch is switched to an OFF state.

The modular interface may include an on-off input configured to be coupled to an ON-OFF switch and a pressure sensor input configured to be coupled to a pressure sensor of a tool, wherein when the ON-OFF switch is switched to an ON state, the control circuit is configured to apply power to the motor until a pressure set point is reached, and thereafter to maintain the pressure around the pressure set point within a given hysteresis, using a control algorithm such as proportional control or PID control.

The modular interface may include a throttle displacement input configured to be coupled to a throttle cable of a tool and a direction switch configured to be actuated by a user, where the control circuit is configured to provide an ON-OFF.

The power input may include a battery receptacle configured to receive a battery.

The battery may be configured to power other handheld power tools.

The motor system may further include a mounting bracket coupled to the housing. The mounting bracket may include substantially a same configuration as a mount of an internal combustion engine that the motor system is intended to replace. The mounting bracket may include substantially a same configuration as a mount of a traditional electric motor that the motor system is intended to replace.

The housing may be configured to house different size motors.

The motor system may further include a transmission to couple an output of the motor to the output shaft. The transmission may be a parallel axis transmission. The transmission may be a modular transmission and where the housing is configured to house different types of transmissions. The transmission couples to the tool through a coupler.

The transmission couples to the tool through a clutch adapter. The clutch adapter may include a ratchet mechanism. The clutch adapter may include a jack screw mechanism. The clutch adapter may include a pressure plate.

In another general aspect, a configurable motor system includes a housing having an electrical power input and an interface receptacle, an electric motor received in the housing, an output shaft rotationally driven by the motor, a motor control circuit received in the housing and configured to control power delivery from the power input to the motor and a plurality of modular interfaces. Each of the plurality of modular interfaces is configured to be removably coupled to the interface receptacle. Each modular interface is configured to receive one or more user inputs and to direct the control circuit to control power delivery to the motor based on the user input and based on pre-programmed instructions corresponding to a tool to which the motor system is attached.

Implementations may include one or more of the following features. For example, the motor system further includes a mounting bracket coupled to the housing. The mounting bracket may include substantially a same configuration as a mount of an internal combustion engine that the motor system is intended to replace. The mounting bracket may include substantially a same configuration as a mount of a traditional electric motor that the motor system is intended to replace.

In another general aspect, a configurable motor system includes a housing having an electrical power input and an interface receptacle, an electric motor received in the housing, an output shaft rotationally driven by the electric motor, a motor control circuit received in the housing and configured to control power delivery from the electrical power input to the electric motor and a modular interface in communication with the motor control circuit through the interface receptacle. The modular interface is configured to receive one or more user inputs and to direct the motor control circuit to control power delivery to the electric motor based on the user input and based on pre-programmed instructions corresponding to a tool to which the motor system is attached.

Implementations may include one or more of the following features. For example, the modular interface may be coupled to the tool to which the motor system is attached.

The modular interface may be in communication with the motor control circuit through a wired connection with the interface receptacle.

The modular interface may be in communication with the motor control circuit through a wireless connection with the interface receptacle.

In another general aspect, a configurable modular interface for controlling an electric motor and a tool, includes a memory that is configured to store pre-programmed instructions for controlling an electric motor for a specific tool and a controller that is configured to execute the instructions that, when executed, cause signals to be transmitted to a motor control circuit to control performance of the electric motor. The modular interface includes one or more inputs for providing input to control the tool and one or more outputs to receive feedback from the tool.

In another general aspect, an adapter for connecting an electric motor system to a tool includes a clutch cup, one or more clutch shoes inserted inside the clutch cup and for engaging an inner surface of the clutch cup and a mechanism connected to the one or more clutch shoes that is capable of keeping the one or more clutch shoes permanently engaged with the inner surface of the clutch cup.

Implementations may include one or more of the following features. For example, the clutch cup and the clutch shoes may be components of the tool. The mechanism may be a component of the electric motor system. The mechanism may include a jack screw mechanism. The mechanism may include a ratchet mechanism.

In another general aspect, an adapter for connecting an electric motor system to a tool includes a clutch cup and a pressure plate that is sized and shaped to fit within the clutch cup. The pressure plate includes a ring that is configured to engage a back face of the clutch cup and multiple spring legs that are attached to ring and that are capable of forcing the ring to permanently engage the back face of the clutch cup.

Implementations may include one or more of the following features. For example, the clutch cup may be a component of the tool. The pressure plate may be a component of the electric motor system.

In another general aspect, an adapter for connecting an electric motor system to a tool includes a clutch cup, an engagement mechanism that is sized and shaped to fit within the clutch cup and is capable of engaging an inner surface of the clutch cup and a fastening mechanism that is connected to the engagement mechanism that, when fastened, causes the engagement mechanism to permanently engage the inner surface of the clutch cup.

Implementations may include one or more of the following features. For example, the clutch cup may be a component of the tool. The engagement mechanism and the fastening mechanism may be components of the electric motor system.

In some implementations, the engagement mechanism may include a rubber ring and a taper ring. The taper ring may be sized and shaped to fit within the rubber ring and the rubber ring may be sized and shaped to fit within the clutch cup. The fastening mechanism may include a washer and one or more bolts that, when tightened, causes the rubber ring to permanently engage the inner surface of the clutch cup.

In some implementations, the engagement mechanism may include one or more clutch shoes and one or more wedges. The clutch shoes and the wedges may be sized and shaped to fit within the clutch cup. The fastening mechanism may include a washer and one or more bolts that, when tightened, causes the one or more clutch shoes and the one or more wedges to permanently engage the inner surface of the clutch cup.

The adapter may further include an inner hub that is sized and shaped to fit within the engagement mechanism.

In another general aspect, a method of replacing an internal combustion engine with an electric motor system in a tool includes providing a tool having a clutch cup input and a mechanical output and internal combustion engine with a clutch for coupling to the clutch cup, where the clutch is configured to disengage from the clutch cup when the internal combustion engine runs at a speed below a threshold value. The method includes replacing the internal combustion engine and clutch with an electric motor system having a clutch adapter for engaging the clutch cup, the clutch adapter configured to always engage the clutch cup regardless of motor speed, where the clutch adapter includes an engagement mechanism that is sized and shaped to fit within the clutch cup and is capable of engaging an inner surface of the clutch cup and a fastening mechanism that is connected to the engagement mechanism that, when fastened, causes the engagement mechanism to permanently engage the inner surface of the clutch cup.

In some implementations, the engagement mechanism may include a rubber ring and a taper ring. The taper ring may be sized and shaped to fit within the rubber ring and the rubber ring may be sized and shaped to fit within the clutch cup. The fastening mechanism may include a washer and one or more bolts that, when tightened, causes the rubber ring to permanently engage the inner surface of the clutch cup.

In some implementations, the engagement mechanism may include one or more clutch shoes and one or more wedges. The clutch shoes and the wedges may be sized and shaped to fit within the clutch cup. The fastening mechanism may include a washer and one or more bolts that, when tightened, causes the one or more clutch shoes and the one or more wedges to permanently engage the inner surface of the clutch cup.

The adapter may further include an inner hub that is sized and shaped to fit within the engagement mechanism.

According to a first aspect of the invention as claimed, there is provided a configurable motor system comprising:
a housing having an electrical power input and an interface receptacle;
an electric motor received in the housing;
an output shaft rotationally driven by the electric motor;
a motor control circuit received in the housing and configured to control power delivery from the electrical power input to the electric motor; and
a modular interface configured to be removably coupled to the interface receptacle, the modular interface configured to receive one or more user inputs and to direct the motor control circuit to control power delivery to the electric motor based on the user input and based on pre-programmed instructions corresponding to a tool to which the motor system is attached.

Preferably, the modular interface comprises a user interface.

Preferably, the modular interface further comprises control electronics configured to control the motor control circuit.

Preferably, the modular interface comprises a functional input comprising at least one of a throttle control input configured to be coupled to a throttle cable of a tool, an on/off switch input configured to be coupled to an on-off switch of a tool, a speed control dial configured to be actuated by a user, a forward-reverse switch configured to be actuated by a user, and a sensor input configured to receive input information from a sensor in a tool.

Preferably, the modular interface comprises a display configured to convey information about tool operation to a user.

Preferably, the modular interface comprises an on-off input configured to be coupled to a remote ON-OFF switch and throttle displacement input configured to be coupled to a throttle cable of a tool, and the control circuit is configured to turn on power to the electric motor only after the on-off switch has been switched to an ON position and a throttle displacement exceeds a predetermined value.

Preferably, the modular interface comprises an on-off input configured to be coupled to an ON-OFF switch, and the control circuit is configured to provide at least one of a soft start when ON-OFF switch is switched to an ON state and a soft stop the ON-OFF switch is switched to an OFF state.

Preferably, the modular interface comprises an on-off input configured to be coupled to an ON-OFF switch and a pressure sensor input configured to be coupled to a pressure sensor of a tool, wherein when the ON-OFF switch is switched to an ON state, the control circuit is configured to apply power to the motor until a pressure set point is reached, and thereafter to maintain the pressure around the pressure set point within a given hysteresis, using a control algorithm such as proportional control or PID control.

Preferably, the modular interface comprises a throttle displacement input configured to be coupled to a throttle cable of a tool and a direction switch configured to be actuated by a user, wherein the control circuit is configured to provide an ON-OFF.

Preferably, the power input comprises a battery receptacle configured to receive a battery and the battery is configured to power other handheld power tools.

Preferably, it comprises a mounting bracket coupled to the housing and the mounting bracket includes substantially a same configuration as a mount of an internal combustion engine that the motor system is intended to replace.

Preferably, the housing is configured to house different size motors.

Preferably, it comprises a transmission to couple an output of the motor to the output shaft. The transmission may be a modular transmission and wherein the housing is configured to house different types of transmissions. Alternatively or in addition, the transmission may couple to the tool through a clutch adapter. If so, the clutch adapter may comprise at least one of a ratchet mechanism, a jack screw mechanism, and a pressure plate.

Preferably, the modular interface comprises a plurality of modular interfaces, each configured to be interchangeably and removably coupled to the interface receptacle, each modular interface configured to receive one or more user inputs and to direct the control circuit to control power delivery to the motor based on the user input and based on pre-programmed instructions corresponding to a tool to which the motor system is attached.

Preferably, the interface receptacle is configured so that the modular interface may communicate with the motor control circuit via the interface receptacle. The modular interface may be in communication with the motor control circuit through a wired connection with the interface receptacle. Alternately, or in addition, the modular interface may be in communication with the motor control circuit through a wireless connection with the interface receptacle.

According to a second aspect of the invention as claimed, there is provided a configurable modular interface for controlling an electric motor and a tool, comprising:
a memory that is configured to store pre-programmed instructions for controlling an electric motor for a specific tool;
a controller that is configured to execute the instructions that, when executed, cause signals to be transmitted to a motor control circuit to control performance of the electric motor;
one or more inputs for providing input to control the tool; and
one or more outputs to receive feedback from the tool.

Advantages may include one or more of the following. The electric motor system is a clean energy system because no fuel is being used to power the tool. This eliminates fuel cost and also provides for a quieter and less maintenance intensive solution. Further, the motor performance may be tailored to the particular tool to which the motor is attached using the pre-programmed modular interface, which can have user interface inputs and/or outputs specific for the attached tool. The modular interface enables both tailored user inputs and tailored outputs from the motor to provide various indications and feedback to the tool operator.

These and other advantages and features will be apparent from the description, the drawings, and the claims.
FIG. 1A is a side view of an internal combustion engine.
FIG. 1B is a perspective view of the internal combustion engine of FIG. 1A coupled to a tool.
FIGS. 2A-2E show various types of power tools with the internal combustion engine of FIG. 1A.
FIG. 3 is a perspective view of an embodiment of a configurable motor system according to the present disclosure.
FIG. 4 is a side view showing the configurable motor system of FIG. 3 replacing the internal combustion engine in the tool of FIG. 2A.
FIG. 5A is a schematic block diagram of the configurable motor system of FIG. 3.
FIG. 5B is a schematic block circuit diagram of the configurable motor system of FIG. 5A.
FIG. 5C is a schematic block circuit diagram of the modular interface of FIG. 5A.
FIG. 6 is a schematic block diagram of another embodiment of a configurable motor system according to the present disclosure.
FIGS. 7A and 7B are perspective and side views of the configurable motor system of FIG. 6.
FIG. 7C is a cross section view of the configurable motor system of FIG. 7B.
FIG. 7D is a perspective view of an example modular interface.
FIG. 7E is a cross section view of the motor and the transmission of FIG. 7C.
FIGS. 8A-8E are schematic views of the configurable motor system of FIGS. 6 and 7A and 7B with various embodiments of interfaces for use with various types of tools.
FIG. 9A are graphs illustrating operation of the configurable motor system with a concrete screed.
FIG. 9B are graphs illustrating operation of the configurable motor system with a drain auger.
FIG. 9C are graphs illustrating operation of the configurable motor system with a sprayer.
FIG. 9D are graphs illustrating operation of the configurable motor system with a small outboard motor for a small watercraft.
FIG. 9E are graphs illustrating operation of the configurable motor system with a pump.
FIG. 10 is a schematic block diagram of another embodiment of a configurable motor system according to the present disclosure.
FIG. 11 is a schematic block diagram of another embodiment of a configurable motor system according to the present disclosure.
FIG. 12 is an exploded perspective view of an example clutch adapter for use with the configurable motor system.
FIG. 13A is an exploded perspective view of an example clutch adapter for use with the configurable motor system.
FIG. 13B is an assembled perspective view of the example clutch adapter of FIG. 13A.
FIG. 14A is an exploded perspective view of an example clutch adapter for use with the configurable motor system.
FIG. 14B is an assembled perspective view of the example clutch adapter of FIG. 14A.
FIG. 15A is an exploded perspective view of an example clutch adapter for use with the configurable motor system.
FIG. 15BB is an assembled first perspective view of the example clutch adapter of FIG. 15A.
FIG. 15BC is an assembled second perspective view of the example clutch adapter of FIG. 15A.
FIG. 15C is side cross section view of the example assembled clutch adapter of FIG. 15BB.
FIG. 15D is a partially assembled, partially exploded perspective view of the example clutch adapter of FIG. 15A.
FIG. 16A is an exploded perspective view of an example clutch adapter for use with the configurable motor system.
FIG. 16B is a partially assembled, partially exploded perspective view of the example clutch adapter of FIG. 16A.
FIG. 17A is an exploded perspective view of an example clutch adapter for use with the configurable motor system.
FIG. 17B is a perspective view of components of the example clutch adapter of FIG. 17A.
FIG. 17C is a partially assembled, partially exploded perspective view of the example clutch adapter of FIG. 17A.

This document describes a configurable motor system and techniques to replace the internal combustion engine 100 on the various tools of FIG. 1B and FIGS. 2A-2E, as well as other tools, with an electric motor system. Additionally, the configurable motor system can be used on products that are traditionally powered by electric motors such as, for example, a drain auger powered by a traditional electric motor. The configurable motor system (or interchangeably referred to as "adaptable motor system" or simply "motor system") includes a housing, an electric motor disposed in the housing, a motor control circuit, and an output shaft driven by the electric motor. The housing includes an electrical power input to enable the motor system to be powered by electric power, such as by a battery. The housing includes a mounting bracket that enables the motor system to mount to the tool in substantially the same way that the engine 100 mounts to the tool. The housing includes an interface receptacle that is configured to receive a modular interface. The modular interface is removably coupled to the interface receptacle on the housing. The modular interface is a user interface that may be unique for each different tool to which the motor system is attached. That is, the modular interface may vary with the particular tool. In this manner, one motor and various modular interfaces may be used for each tool or application. It is the same motor system that would replace the internal combustion engine 100 on the various tools, but having potentially differently configured modular interfaces based on the particular tool. Likewise, it is the same motor system that would replace a traditional electric motor on various other tools, equipment or applications, but having potentially differently configured modular interfaces based on the requirements of the particular tool, equipment or application.

In another implementation, the modular interface may be a separate component that is located somewhere else on the tool other than being coupled to the housing. In the example of the modular interface being located elsewhere on the tool, a connector (e.g., a wired connector) may connect the modular interface to the interface receptacle on the housing.

The modular interface enables inputs to the electric motor through the motor control circuit and enables inputs to the tool. The modular interface is configured to receive one or more user inputs and to cause the motor control circuit to control power delivery to the motor based on the user input. The modular interface also receives feedback from the motor control circuit and/or the tool and provides output to the user (i.e., tool operator) through the modular interface based on the received feedback. In one implementation, the modular interface is pre-programmed to be tool-specific such that the modular interface includes pre-programmed instructions, and a controller to execute the instructions, corresponding to the tool to which the motor system is attached. In another implementation, the modular interface may simply act as a pass through device that receives user inputs and provides output from the motor control circuit and/or the tool to the user without having pre-programmed instructions and without having a controller.

The electrical power input on the motor housing may include a receptacle to receive an energy source (e.g., a battery) to power the motor. For example, the receptacle may be configured to receive a lithium-ion battery pack to provide power to the electric motor in order to power the tool to which the motor system is attached. Also, the motor housing may include multiple receptacles to receive multiple batteries that may be connected in parallel to provide additional power to the electric motor to provide for additional motor, and thus tool, runtime. One or more of the multiple batteries also may be removed from the receptacle and used to power other tools or equipment while the remaining battery or batteries would provide power through the receptacle to the electric motor. The multiple batteries may also be configured in a series to provide high voltage to the electric motor.

The electric motor may be implemented as a brushless motor. For example, the brushless motor may be a 60 V DC brushless motor that is powered by a lithium-ion battery. Other types of batteries having different battery chemistries also may be used. Other types of motors may also be used, for example brushed universal, VF induction motors, etc. Examples of brushless motors usable in the configurable motor system include those disclosed in the above-mentioned US Application Nos. 15/292,639 and 15/335,568.

The use of an electric motor system to replace the internal combustion engine 100 on the various tools illustrated in FIGS. 2A-2E, provides multiple advantages. For example, the electric motor system is a clean energy system because no fuel is being used to power the tool. This eliminates fuel cost and also provides for a quieter and less maintenance intensive solution. Further, the motor performance may be tailored to the particular tool to which the motor is attached using the pre-programmed modular interface, which can have user interface inputs and/or outputs specific for the attached tool. The modular interface enables both tailored user inputs and tailored outputs from the motor to provide various indications and feedback to the tool operator.

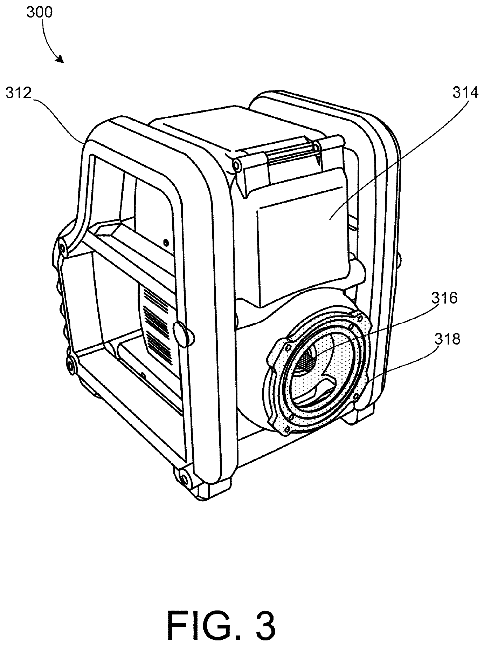

Referring to FIG. 3, an example configurable motor system 300 is illustrated. The motor system 300 is one example implementation of the configurable motor system discussed above that is intended to replace the internal combustion engine 100 on the various tools illustrated in FIG. 1B and FIGS. 2A-2E, as well as other tools, including tools or applications that use traditional electric motors. The motor system 300 is configured to attach directly to one of the tools and to provide electric power to the tool as controlled through inputs on the modular interface of the motor system. For each of the tools illustrated in FIGS. 2A-2E, the internal combustion engine 100 is replaced by the motor system 300. The motor system 300 is configurable because one motor system may be used to power multiple different types of tools, equipment and applications including those traditionally powered by internal combustion engines and those traditionally powered by other electric motors. A different modular interface is mated with the motor system 300, where the modular interface is tool-specific and the modular interface enables operation of the same electric motor in a tool-specific manner, as appropriate.

The motor system 300 includes a housing 312. The housing 312 is configured so that the overall envelope may be substantially similar to the internal combustion engine 100, including fuel tank, or traditional electric motor that the motor system 300 is intended to replace. The housing 312 includes an electrical power input 314, an interface receptacle (not shown in this view) and an electric motor received in the housing (not shown). The electrical power input 314 is configured as a battery receptacle to receive a battery, such as a lithium-ion battery, to provide power to the electric motor through the electrical power input. The motor system 300 includes an output shaft 316 that is rotationally driven by the electric motor. The output shaft 316 mates with the attached tool (not shown) through the mounting bracket 318, which couples to one of the tools. The output shaft 316 drives rotating components of the various tools causing the tools to produce work and perform functions specific for the particular tool, in the same manner as the engine 100 drives rotating components of the various tools. The mounting bracket 318 includes substantially a same configuration as a mount of the internal combustion engine 100 that the motor system 300 is intended to replace. In this manner, the mounting bracket 318 may bolt, or otherwise couple, to the different tools in FIGS. 2A-2E, in substantially the same way that the engine 100 couples to those tools. The housing 312 also may include alternative mounting brackets and other coupling points to enable the motor system 300 to be securely attached to one of the tools, as appropriate. For instance, other mounting brackets may be used to couple the motor system 300 to a tool that may otherwise use a traditional electric motor.

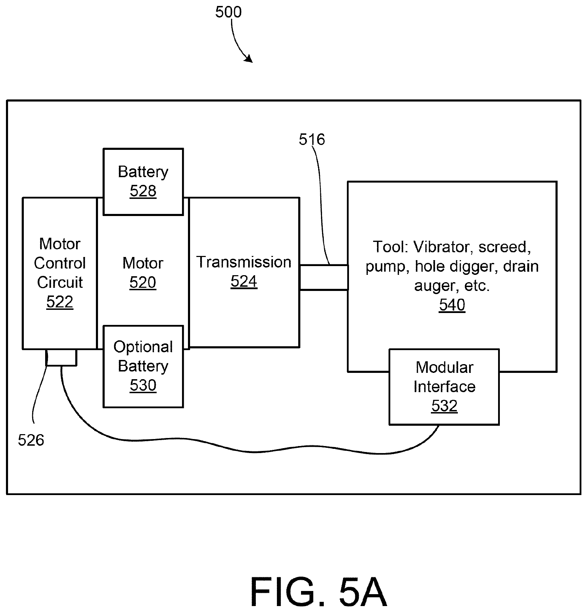

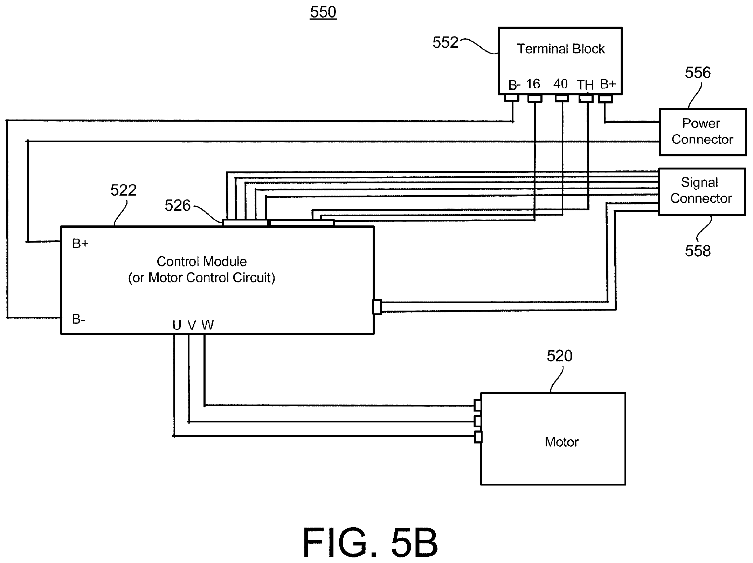

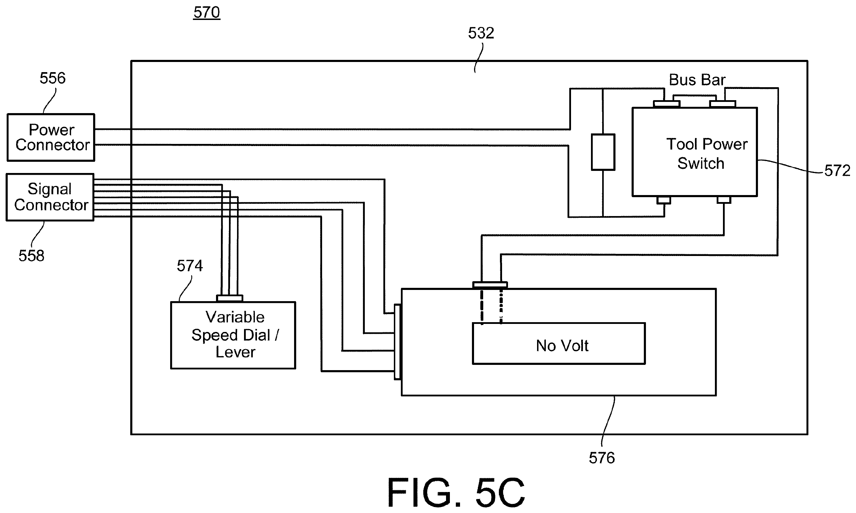

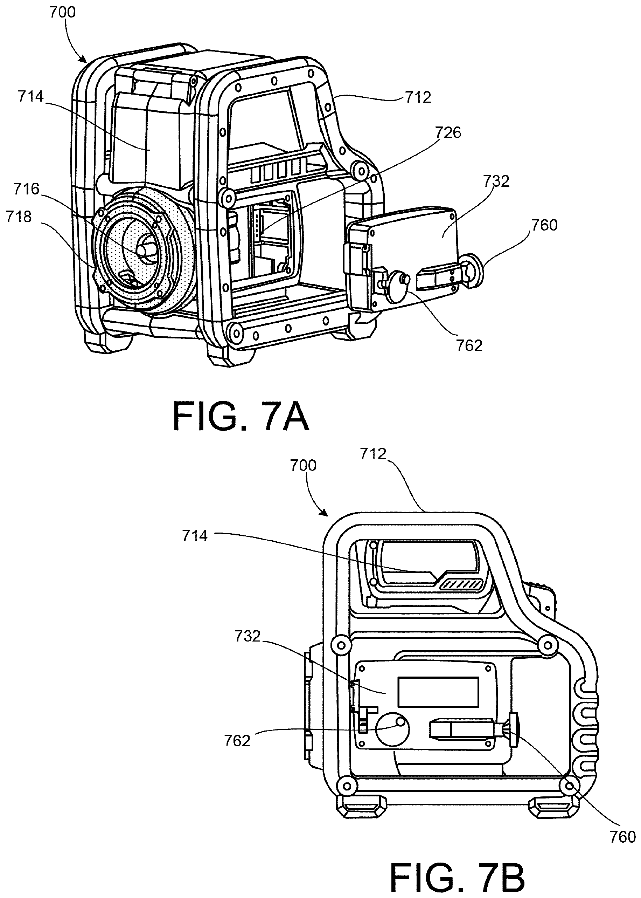

As discussed above, the housing 312 is configured to receive an electric motor, such as an electrically commutated, brushless direct current (DC) motor (not shown). Other types of motors also may be used, including a brushed DC motor. The housing 312 also includes a motor control circuit (not shown) and other components to control the operation of the brushless motor. The battery received in the electrical power input 314 provides power through to the motor control circuit and the brushless motor. The housing 312 is also configured to receive a modular interface, which may be powered by the battery or a separate power supply, at the interface receptacle (shown in FIGS. 7A and 7B). The modular interface provides input to the motor control circuit to operate the brushless motor according to the particular tool characteristics to which the motor system 300 is attached. The modular interface also receives Information from the motor control circuit and/or the tool itself and provides an output to the user of the tool. The details of the modular interface are discussed in more detail below with respect to FIGS. 5, 6, 7A, 7B, 8A-8E, 10 and 11.

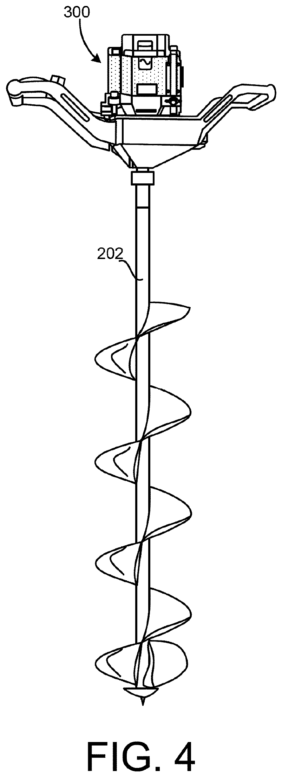

Referring also to FIG. 4, the configurable motor system 300 is illustrated as attached to the post hole digger 202 from FIG. 2A. In FIG. 4, the motor system 300 has replaced the internal combustion engine 100. Now, the motor system 300 provides power and input to control the post hole digger 202. As discussed in more detail below, the modular interface that is coupled to the motor system 300 is specific to and pre-programmed to control the motor in the motor system 300 for the post hole digger 202. The mounting bracket 318 couples directly to the post hole digger 202 to enable the output shaft 316 to provide rotational force to the post hole digger 202. The motor system 300 through the modular interface provides various inputs to the post hole digger 202 including, for example, a main on/off input, a variable speed input, a brake input, motor direction input and other features as appropriate such as clutch settings, and soft starts/stops. The motor control circuit and/or the post hole digger 202 may provide feedback to the user through the modular interface including LED indicator information to indicate whether the tool is on or off, brake activation information and spindle speed information. These are just some examples of the inputs and outputs that may be provided through the modular interface, which may vary from tool to tool.

Use of the motor system 300 with the post hole digger 202 does not require any modifications to the post hole digger 202. Instead, the motor system 300, through the mounting bracket 318, couples directly to the post hole digger 202 in a same manner that the internal combustion engine 100 coupled to the post hole digger 202. With the use of the motor system 300, the brushless motor may be operated in a manner to provide maximum performance of the post hole digger 202 using the pre-programmed modular interface that is pre-programmed specifically to match the motor performance to the operation of the post hole digger 202.

Referring to FIG. 5A, an example block diagram of a configurable motor system 500 illustrates the configurable motor system 300 of FIG. 3 in block diagram format. The motor system 500 illustrates one or more of the components of the motor system 300, some of which were not illustrated in FIG. 3. For example, the following components may be included within the housing 312, a motor 520 (e.g., an electric motor), a motor control circuit 522, a transmission 524, and an interface receptacle 526. A battery 528 provides electric power to the motor 520, the motor control circuit 522 and the interface receptacle 526. The battery 528 also may provide power to a modular interface 532, which is coupled to the interface receptacle 526. The battery 528 may be coupled to the motor 520 through an electrical power input to the housing. As illustrated in FIG. 3, the electrical power input may be a battery receptacle that is configured to receive the battery, such as battery 528.

The motor system 500 also may include one or more optional batteries such as optional battery 530. The optional battery 530 also may be coupled to the motor 520 through an electrical power input to the housing. The electrical power input to the housing may be a battery receptacle that is configured to receive the battery such as optional battery 530. In implementations where both battery 528 and optional battery 530 are present, the batteries may be connected in parallel to provide additional runtime or in series to provide additional power to the motor system 500 and connected tool.

The motor 520, as discussed above, may be implemented as a brushless motor, which may be powered by the battery 528 and optional battery 530. The battery 528 and the optional battery 530 may be implemented as lithium-ion batteries, although other battery chemistries may be used. In operation, the motor 520 imparts rotational force to a transmission 524 which in turn rotates the shaft 516 to provide rotational motion to the tool 540. The transmission 524 may include one or more gear reductions that can be selected from a limited set of ratios if needed to meet speed and torque requirements of the particular tool application. In other implementations, the transmission 534 may be direct drive with no gear reduction.

The tool 540 may be one of the tools illustrated in FIG. 1B or FIGS. 2A-2E or may be other types of tools where the motor system replaces the internal combustion engine or traditional electric motor and couples the shaft 516 and a mounting bracket (e.g., mounting bracket 318 of FIG. 3) to the tool such that the motor system provides power to operate the tool. Some examples of the tool 540 may include a vibrator, a concrete screed, a pump, a hole digger, a drain auger, etc.

The modular interface 532 is a physical component that is removably attached to the interface receptacle 526. The modular interface 532 may be plugged into the interface receptacle 526 and may be a removable component by simply unplugging the modular interface 532 from the interface receptacle 526. The modular interface 532 is pre-programmed to include motor settings, user interface inputs and other controls to operate the motor 520 for the specific type of tool to which the motor system is attached. The modular interface may also be mounted remotely from the motor housing and removably attached to the motor controller via a wired or wireless connector or communications device.

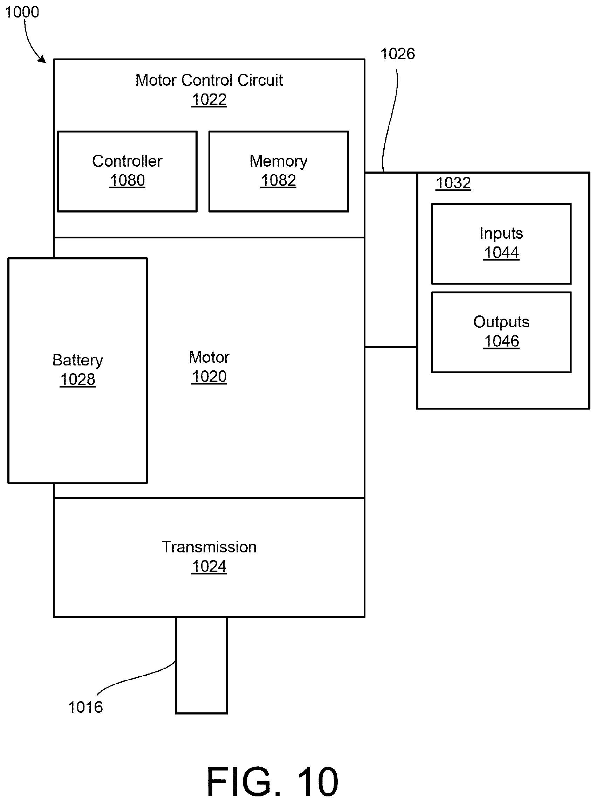

The modular interface 532 may provide input to the motor control circuit 522 to modify the motor performance to meet application specific requirements that are specific to the tool to which the motor system is attached. The modular interface 532 may include one or more connections directly to the tool, where the connections may be wired and/or wireless connections. The modular interface 532 may provide various inputs to the motor system and the tool through a user interface that is part of the modular interface 532. For example, the modular interface inputs may include an on/off switch input that is coupled to and on off switch. The modular interface inputs also may include one or more controls for the motor including a variable speed input, a brake input, a clutch setting input, a soft start/stop input, a motor direction input, and a potentiometer input. For example, there may be a potentiometer input on the modular interface coupled to an existing throttle cable on the tool so that actuating the throttle switch will change the speed of the motor. The modular interface may include an input switch for receiving a signal from an on-off switch or a foot pedal on/off switch, a dial for adjusting maximum motor speed, and a reverse switch for changing the direction of the motor. These and other controls may be received from the modular interface 532 and input to the motor 520 through the motor control circuit 522. The modular interface 532 includes electronics such as a memory and a controller that are programmable to adjust motor performance. In other implementations described below with respect to FIG. 10, the modular interface may simply be a pass-through module that passes the inputs to the motor control circuit 522 and/or to the tool, without having any specific components that may be pre-programmed in the modular interface.

The modular interface 532 may provide power to and accept various sensor data such as pressure sensor information, vibration information, and other types of sensor data information from the tool 540. The received sensor data may be acted on by the modular interface 532 to adjust the motor 520 as part of a closed loop feedback type system.

The modular interface 532 may receive information from the motor control circuit 522 through the interface receptacle 526 and/or may receive information from the tool 540 through wired and/or wireless couplings to the tool 540. In this manner, the modular interface may provide outputs to provide information to the tool user such as through the use of LED or other indicators. The outputs may include an on/off LED indicator, a brake activated LED indicator, a spindle rotation direction, and/or a spindle speed indicator. The modular interface 532 also may include a display, which may be digital and/or analog, to provide information and/or feedback to the tool user. Communications between the modular interface 532 and the interface receptacle 526 may include discrete channels or I2C or other similar protocols.

FIG. 5B is a schematic block circuit diagram 550 (or circuit 550) of the configurable motor system of FIG. 5A. The circuit 550 includes a terminal block 552, a control module 522 (or motor control circuit), a power connector 556 and a signal connector 558. The terminal block 552 electrically connects to the battery 528 of FIG. 5A to enable the battery 528 to provide power to the circuit 550 and its components. The terminal block is wired to distribute power from the battery 528 to the control module 522 and to the power connector 556. The control module 522 of FIG. 5B is the same component as the motor control circuit 522 of FIG. 5A, which controls the motor 520 of FIG. 5A, as also illustrated in FIG. 5B.

The power connector 556 electrically connects to the modular interface 532 of FIG. 5A and receives provides power from the battery 528 through the terminal block 552. The power connector 556 provides the received power to the modular interface 532. The power connector 556 is also electrically connected to the control module 522.

The signal connector 558 electrically connects to the modular interface 532 of FIG. 5A and also electrically connects to the control module 522 through the interface receptacle 526, as illustrated in both FIG. 5A and FIG. 5B. The signal connector 558 provides a bi-directional electrical conduit for signal to pass between the modular interface 532 and the control module 522. In this manner, all signals, including control signals, data, feedback, and any other type of signal including ones described throughout may be communicated between the modular interface 532 and the control module 522 for the motor 520.

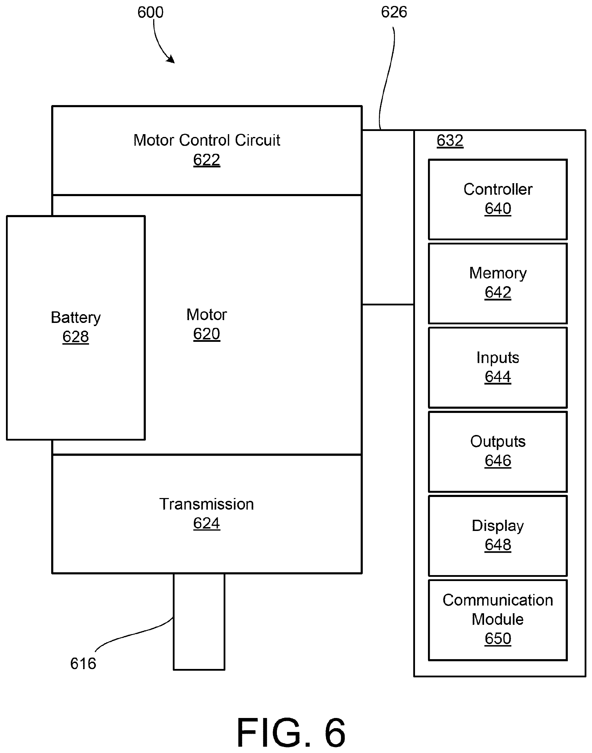

While the circuit 550 is discussed with respect to the motor system 500, the circuit 550 (or a similar circuit) may be used with all the other motor systems discussed below, including the motor systems of FIGS. 6, 7A, 10 and 11.

FIG. 5C is a schematic block circuit diagram 570 (or circuit 570) of the modular interface 532 of FIG. 5A. The circuit 570 illustrates that the power connector 556 and the signal connector 558 of FIG. 5B electrically connect to the modular interface 532 of FIG. 5A. The modular interface 532 may include various components that are specific to the tool for which the modular interface 532 is designed. For example, in FIG. 5C the modular interface 532 includes and illustrates the electrical connections with a tool power switch 572, a variable speed dial/lever 574 and a no volt component 576. Other modular interfaces for other tools may include the same and/or other components. The tool power switch 572 is connected to the power connector 556. The variable speed/lever dial 574 and the no volt component 576 are connected to the signal connector 558. The variable speed/lever dial 574 is an input that is actuated by a user. The user can adjust the speed of the motor to a desired speed using a physical dial or lever on the modular interface 532 and the variable speed dial/lever 574 provides the received speed input signal to the motor through the signal connector 558 and the control module 522 of FIG. 5B. The no volt component 576 works to prevent an unintended start to the tool. For example, the no volt component 576 prevents the tool from re-starting after certain interruption conditions to the tool that cause the tool to stop with the tool power switch 572 still in the on position. When the interruption condition is cleared, the no volt component 576 prevents the tool from re-starting even if the tool power switch 572 is on. The user must first move the tool power switch 572 to off to re-set the no volt component 576 and then move the tool power switch 572 to on. For instance, one interruption condition may be a motor overload condition where the motor controller shuts the motor down when a motor overload condition is detected. Another interruption condition may be when the battery is withdrawn while the motor is running or when the battery is dead. In all of these examples, the no-volt component 576 requires that the user cycle the tool power switch 572 to off before the tool can be re-started once the interruption condition is cleared. The components 574 and 576 provide and receive signal communication through the signal connector 558 to the control module 522 of FIG. 5B.

In one example implementation, the post hole digger 202 of FIG. 4 with the configurable motor system 300 attached may provide the following features. For example, the modular interface 532 may incorporate one or more motion sensors (e.g., one or more gyroscopes and/or accelerometers) and a controller(or may selectively activate a motion sensor already resident on the motor controller), which may be programmed to provide anti-kickback control and shut down features, e.g., as described in U.S. Patent No. 7,410,006, or may provide motion control actuation, e.g., as described in U.S. Patent No. 8,418,778. This may enable the post hole digger to be controlled like a motion controlled screwdriver or drill. The modular interface also may include one or more motion sensors (e.g., gyroscopes or accelerometers), which may sense and indicate level or plumb, e.g., as described in U.S. Patent Application No. 13/779,919. A laser distance sensor may be used to indicate depth. The post hole digger with the motor system 300 attached has advantages over the post hole digger with the internal combustion engine attached. For example the post hole digger with the motor control system 300 attached is more quiet, is cleaner because no fuel is required and it improves user comfort and control. Further, the modified tool may improve post hole plumb and depth accuracy.

Referring to FIG. 6, an example block diagram of a configurable motor system 600 is illustrated. The motor system 600 Includes a motor 620, a motor control circuit 622, a transmission 624, an output shaft 616, a battery 628, an interface receptacle 626 and a modular interface 632. The components illustrated in the motor system 600 may function in a manner that is the same or similar to the components of the configurable motor system 300 of FIG. 3 and configurable motor system 500 of FIG. 5A. In this example, the particular tool is not illustrated.

In the example motor system 600, the modular interface 632 is illustrated in additional detail showing one or more of the possible components of the modular interface 632. The modular interface 632 may include a controller 640, a memory 642, inputs 644, outputs 646 and a display 648. The controller 640 and the memory 642 enable the modular interface 632 to be programmed with instructions, which may be tool-specific and/or application-specific. The memory may be a non-volatile memory such as an EEPROM, which may be programmed with instructions for controlling the motor 620 through the motor control circuit 622 or for controlling the tool in some manner. Other types of memory also may be used where instructions may be pre-programmed and committed to the memory 642. The memory 642 also may include instructions for operating a tool attached to the motor system 600. The memory 642 also may include other software and/or applications that are configured to process data inputs and provide setpoints for motor performance set up and operation. The controller 640 may include a processor or microcontroller or other type of controller that is capable of executing the instructions stored on the memory 642. In this manner, the controller 640 provides motor performance information that is stored in the memory 642 to the motor control circuit 622 for operation of the motor 620 as appropriate for the tool to which the motor system 600 is attached.

Motor performance instructions stored in the memory 642 and executed by the controller 640 in conjunction with the motor control circuit 622 may include maximum speed of the motor, minimum speed of the motor, fixed rotation direction of the motor, brake rate of the motor and other instructions from the user interface including, variable speed inputs forward and reverse selection, clutch setting, on/off and interrupt switch settings. The motor control circuit 622 provides feedback to the modular interface 632 including information such as power of the motor, speed of the motor and status of the motor to the modular interface 632. The feedback from the motor control circuit 622 that is provided to the modular interface 632 through the interface receptacle 626 may be indicated to the user through the outputs 646 and/or the display 648.

The inputs 644, outputs 646 and display 648 are optional components that may vary from tool to tool. That is, the modular interface 632 may be different for each tool to which the motor system 600 is installed. The modular interface 632 is a removable component that removably connects and attaches to the motor system 600 at the interface receptacle 626. In its simplest form, a modular interface 632 may be a complement of dip switches or hard wire jumpers and pass-through of user interface inputs. Each different modular interface 632 may have different physical interface cables, throttle cables, sensors, sensor inputs or LED displays depending upon what a particular tool apparatus requires for its operation.

For tools that include one or more sensors, the sensor information may be provided to the modular interface 632 and received by the modular interface. The received sensor data may be processed by the controller 640 and the data may be indicated to the user through the output 646 and/or the display 648. The received sensor data may be used by the controller 640 to adjust the motor performance based on the received sensor feedback. The modular interface 632 may also act as the conditioner and conduit for power to the sensors and to auxiliary devices and peripherals like a servo motor or solenoid valves. This power may come from the battery 628 that powers the motor 620, but it may also come from an auxiliary battery (not shown) that may be dedicated to provide power to the peripherals.

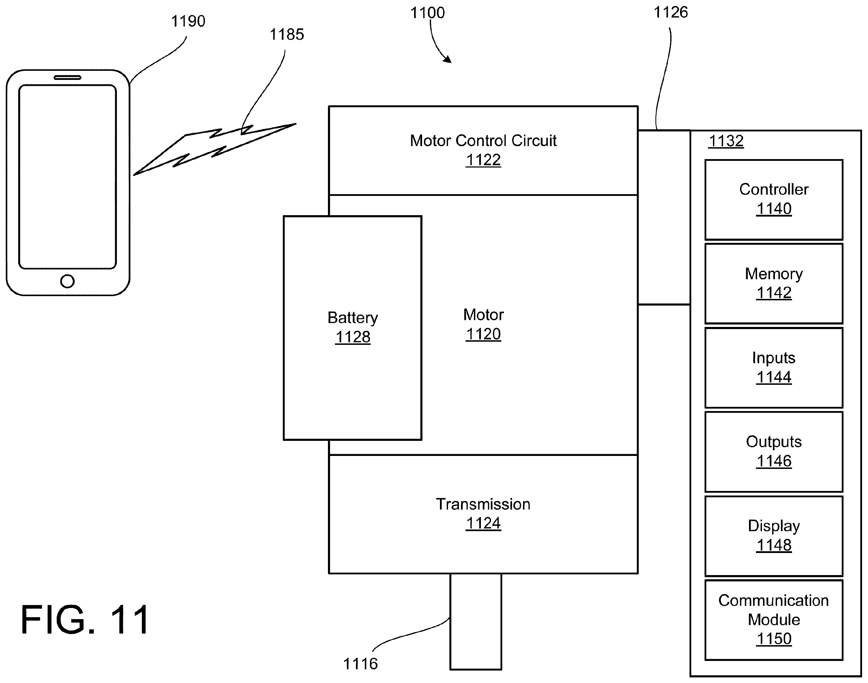

The modular interface 632 also may include an optional communication module 650. The communication module 650 enables wireless and/or wired communications with another device, such as a mobile computing device, to enable the mobile computing device to provide input and receive output from the modular interface 632. An example is discussed in more detail below with respect to FIG. 11. The communication module 650 may use one or more different communication protocols including, for example, Bluetooth or other wireless protocols to communicate with another device. Other commonly known communication protocols also may be used.

As mentioned, the modular interface 632 may be customized for each different tool to which the motor system 600 is attached. Below are described different, customized modular interfaces 632 that have different inputs and/or outputs depending on the particular tool or application with which they are being used. For instance, for a tool such as a tiller or string trimmer, the modular interface may include an on/off switch input and a potentiometer with a spring return to zero and throttle cable connection. In this manner, the modular interface can control the operation of the motor 620 using the on off switch input and may control the throttle on the particular tool using the potentiometer.

In another example, for an application with a more sophisticated input/output control such as a pump for a sprayer, compressor, or other closed loop pressure control tool, the modular interface 632 may include an on/off switch input, a pressure sensor input, and a dial input pressure setpoint.

In yet another example, for an application such as a vibratory screed or a concrete vibrator, the modular interface 632 may include connector and wiring for an on-tool on/off switch input and a dial speed setting. Thus, for this application the on/off switch input may not be directly on the modular interface itself, but instead may provide a connection point and wiring to connect to the on/off switch for the tool itself.

In still another example of a modular interface 632, the modular interface 632 may include an on/off switch input and a potentiometer dial speed input with detents. This modular interface 632 may be used as an alternative control for a concrete screed, a pump, or a concrete vibrator.

For more sophisticated controls for a screed and vibrator, the modular interface 632 may also include an accelerometer input. The accelerometer may be used for a closed loop speed control and may take output or feedback from the tool itself and use the accelerometer input to directly control the speed of the motor and the tool.

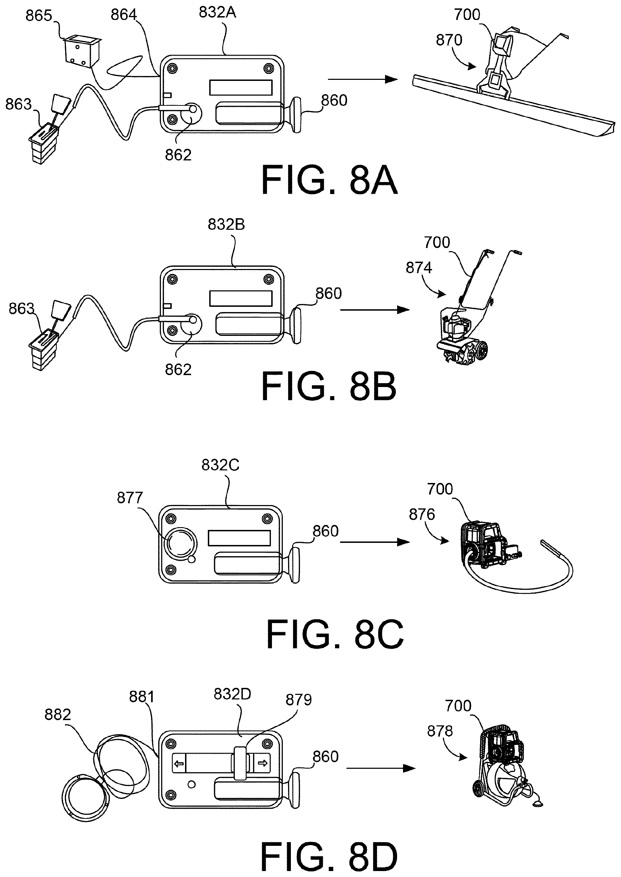

Other modular interface examples may include clutch setting inputs along with on-tool on/off switch inputs and/or on-tool variable speed trigger inputs. These various modular interface examples described above provide customizable features based on the particular tool to which the motor system will be attached. FIGS. 8A-8E below illustrate various modular interface examples along with the corresponding tool examples that they may be used with. It should be noted that the input devices/components may be integral to the modular interface, remote and wired to the modular interface, and/or remote and wirelessly linked to the modular interface.

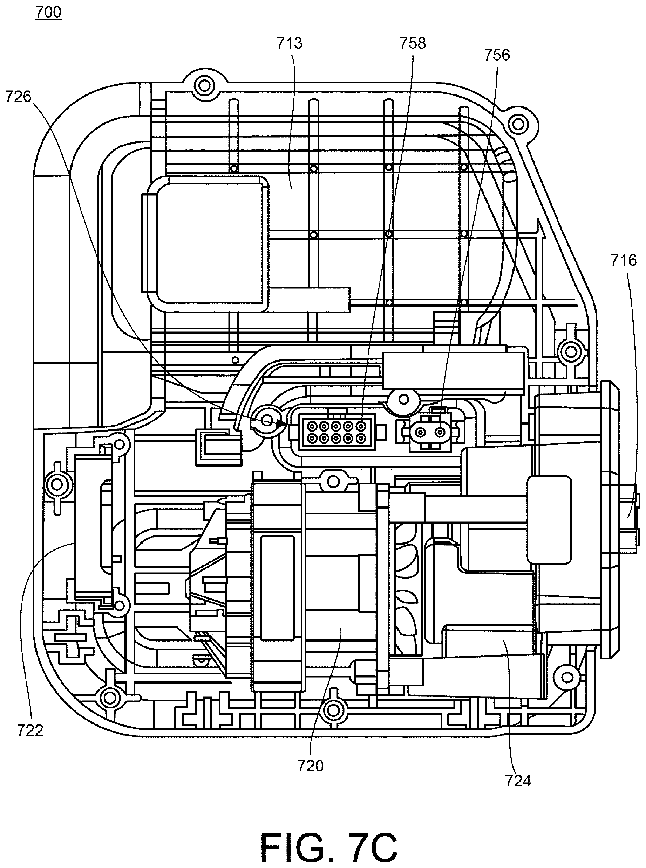

Referring also to FIGS. 7A, 7B and 7C, a configurable motor system 700 illustrates a perspective view (FIG. 7A), a side view (FIG. 7B) and a cross section of the side view of the opposite side of FIG. 7B (FIG. 7C) of the configurable motor system 600 of FIG. 6. The motor system 700 includes a housing 712, an electric power input 714, an output shaft 716, a mounting bracket 718, a motor 720, a motor control circuit 722, an interface receptacle 726 and a modular interface 732. The housing 712 also includes a compartment 713 for receiving a battery such as battery 628 of FIG. 6. The housing 712, electrical power input 714, the mounting bracket 718, and the output shaft 716 correspond to the components described above with respect to the configurable motor system 300 of FIG. 3, 500 of FIG. 5 and 600 of FIG. 6. The motor 720, the motor control circuit 722 and the transmission 724 correspond to the like components described above with respect to the configurable motor system 500 of FIG. 5A and the configurable motor system 600 of FIG. 6. The interface receptacle 726 and the modular interface 732 correspond to the like components described above with respect to the configurable motor system 500 of FIG. 5A and the configurable motor system 600 of FIG. 6. FIG. 7A illustrates the modular interface 732 as being removed from the interface receptacle 726, whereas FIG. 7B illustrates the modular interface 732 installed and coupled to the interface receptacle 726.

In this example, the modular interface 732 plugs directly into the interface receptacle 726. The interface receptacle 726 includes a power connector 756 and a signal connector 758 that provide physical and electrical connections between the modular interface 732 and the other components as illustrated in the circuit 550 of FIG. 5B and the circuit 570 of FIG. 5C. The power connector 756 includes a two pin connector and the signal connector 758 includes a ten pin connector for providing bi-directional communications between the modular interface 732 and the motor control circuit 722.

The entire motor system 700 is attached to a particular tool or apparatus instead of an internal combustion engine. The housing 712 also houses a transmission 724 that connects to the motor 720 to provide translate the motor output to the rotational output of the shaft 716. The modular interface 732 may include the components described above with respect to the modular interface 632 of FIG. 6. Thus, the modular interface 732 may include a memory and a controller that are pre-programmed with instructions stored in the memory for the processor to execute in order to control the motor performance. In this example, the modular interface 732 includes an on/off switch input 760 and a mechanical throttle connection 762. These particular inputs have been adapted to the various physical interface needs of a particular tool. The on/off switch input 760 may control the turning on and off of the electric motor within the housing 712. The mechanical throttle connection 762 may include a cable that connects directly to the throttle on the tool. In this manner, when the user operates the throttle on the tool itself, the input from the throttle on the tool is provided to the modular interface 732 through the mechanical throttle connection 762. Similarly, the user may use the mechanical throttle connection 762 to operate the throttle on the tool. The throttle signal provided to the modular interface 732 is processed and provided to the motor control circuit in the motor system 700 in order to appropriately throttle the electric motor based on the throttle positioning set by the user, either at the tool or the modular interface.

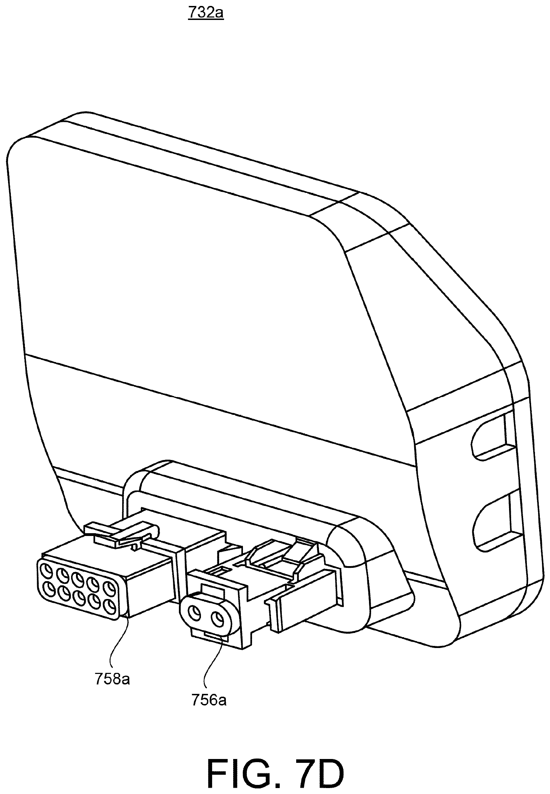

Referring to FIG. 7D, a perspective view of an example modular interface 732a is illustrated. The modular interface 732a includes all the features and functionality of the modular interfaces described above including the modular interface 532 of FIG. 5A, the modular interface 632 of FIG. 6 and the modular interface 732 of FIGS. 7A and 7B. The modular interface 732a is designed to connect to the interface receptacle 726 as illustrated in FIG. 7C. The modular interface 732a includes a power connector 756a and a signal connector 758a. The power connector 756a connects to the power connector 756 and the signal connector 758a connects to the signal connector 758.

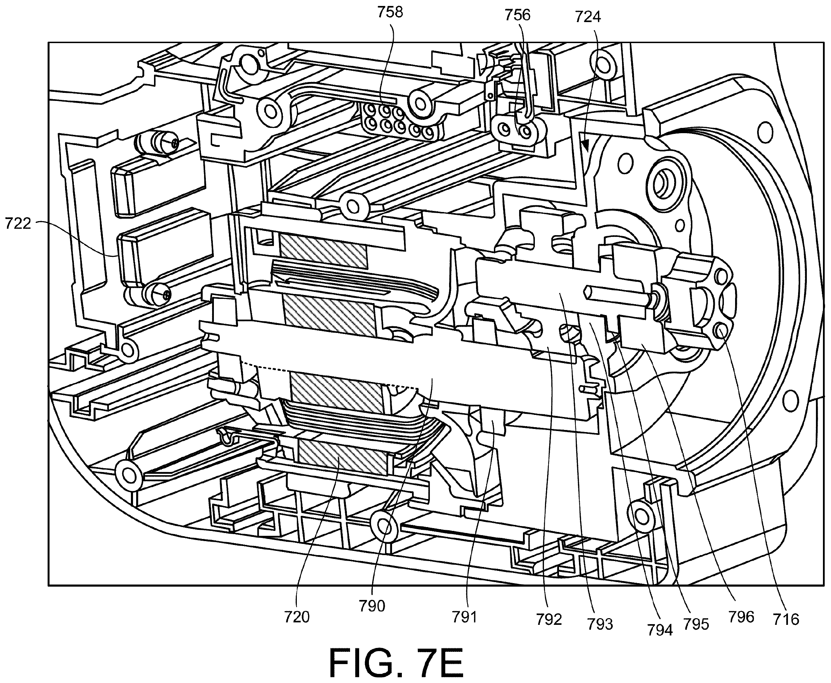

FIG. 7E is a cross section view of the motor 720 and the transmission 724 of FIG. 7C. The transmission 724 is an example of a parallel axis transmission with a configurable gear case. The motor 720 and the transmission 724 are modular in that different motor and/or transmission combinations may be inserted during manufacturing into the housing 712 for use with different tools. In some implementations, the transmission 724 is modular with respect to the motor 720 and vice versa so that different motor and transmission combinations may be used. The housing 712 is sized and configured to accept different size motors, which may include different numbers of windings. The motor 720 includes a motor output shaft 790 supported by a bearing 791. The motor output shaft 790 is connected to a pinion gear 792, which in turn is connected to a circular spur gear 794, both of which are on a second shaft 793. The pinion gear 792 and the circular spur gear 794 provide a gear reduction to reduce the speed of the motor output shaft 790 and increase the torque. The gear reduction may be based on the gear ratios between the pinion gear 792 and the circular spur gear 794. In some implementations, different size gears may be used and/or different types of gears may be used to provide a desired shaft speed and torque for a particular tool. The second shaft 793 includes a bearing 795 to support the second shaft 793 and also includes a coupler 796 to couple the second shaft to a clutch adapter, which is connected to the tool. In some implementations, the coupler 796 is a Lovejoy coupler, where Lovejoy is a registered trademark of Lovejoy, Inc.

Referring to FIGS. 8A-8E, various schematic views of the configurable motor system 600 of FIG. 6 and the configurable motor system 700 of FIGS. 7A and 7B with various embodiments of modular interfaces are illustrated for use with various types of tools. FIG. 8A illustrates a modular interface 832A being used with a concrete screed 870. The motor system 600 of FIG. 6, as also illustrated in the motor system 700 of FIGS. 7A and 7B, is attached to the concrete screed 870. In this example, the modular interface 832A is installed on the motor system instead of the modular interface 732 as shown in FIGS. 7A and 7B. The modular interface 832A includes an on/off switch input 860, a mechanical throttle connection 862 and a remote switch input connection 864. The on/off input 860 controls the turning on and off of the electric motor. The mechanical throttle connection 862 receives input from the throttle 863, which is located on the concrete screed 870. The switch input 864 receives input from the remote switch 865, which is located on the concrete screed 870.

The modular interface 832A is pre-programmed with the input and output and motor characteristics and controls appropriate for operation of a concrete screed 870. For example, the setpoints required for the screed including speed, throttle sensitivity, and the start/stop curves may be pre-programmed in the modular interface 832A. The inputs provided to the modular interface 832A include a connection for the remote switch 865 and the mechanical throttle connection 862 to receive the throttle input 863 as operated by the tool user.

FIG. 8B illustrates a modular interface 832B being used with a tiller 874. As before, the motor system 700 is installed on the tiller 874. The modular interface 832B is configured specifically for the tiller 874. In this example, the modular interface 832B includes the on/off switch input 860 and the mechanical throttle connection 862, which is configured to receive input from the throttle 863 on the tiller 874. The modular interface 832B is pre-programmed with the setpoints required for operation of the tiller including speed and rotation direction. The input on the modular interface 832B for the tiller 874 includes the mechanical throttle connection input 862 for controlling the starting and stopping of the electric motor. In this configuration, the throttle has an initial flat profile that acts as an OFF condition. When the throttle is actuated past this flat area of the profile, the motor is turned ON. Further displacement of the throttle lever causes the motor speed to ramp up according to the sensitivity parameter programmed into the modular interface 832B.

FIG. 8C illustrates a modular interface 832C installed as part of the motor system 700 on a concrete vibrator 876. The modular interface 832C is configured specifically for the concrete vibrator 876. In this example, the modular interface includes the on/off switch input 860 and a set speed dial 877. The speed dial 877 provides speed settings for operation by the user to control the speed of the concrete vibrator 876. The modular interface 832C is pre-programmed with the setpoints required for the concrete vibrator 876, including speed and dial sensitivity.

FIG. 8D illustrates a modular interface 832D installed as part of the motor system 700 on a drain auger 878. The modular interface is configured specifically for the drain auger 878. In this example, the modular interface 832D includes an on/off switch input 860, a forward/reverse input 879 and a foot switch input 881. In this manner, the modular interface 832D is specifically configured for operation with the drain auger 878. The tool user may operate the pneumatic or contact foot switch 882 which provides input through the foot pedal connection 881 on the modular interface 832D for operation of the drain auger 878. The forward/reverse input 879 controls the direction of operation of the electric motor in order to forward or reverse the operation of the drain auger 878. The modular interface 832D is configured specifically for the drain auger. Modular interface 832D is pre-programmed with the setpoints required for the drain auger including speed of the drum auger and the soft start/stop setpoints for the motor operation necessary to operate the drain auger.

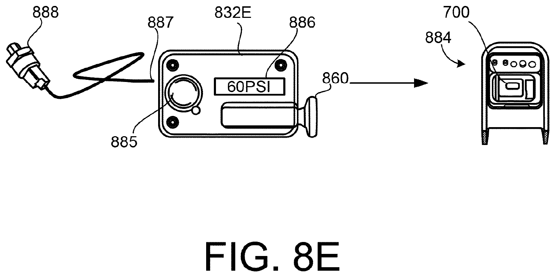

FIG. 8E illustrates a modular interface 832E installed as part of the motor system 700 on a compressor 884. The modular interface 832E is configured specifically for the compressor 884. In this example, the modular interface 832E includes an on/off switch input 860, a dial pressure setting input 885, a pressure sensor input 887 that is connected to a pressure sensor 888 on the compressor, and a display 886 which may display the pressure setting. In this manner, the user may control the operation of the electric motor through the on/off switch input 860. The user may set the pressure setting for the compressor 884 using the dial pressure setting input 885 and obtain a digital readout on the display 886 of the pressure. The modular interface 832E receives pressure sensor input from the pressure sensor 888 on the compressor 884 as received through the pressure sensor input 887. The modular interface 832E is pre-programmed with the setpoints for the compressor 884 including, for example, the speed setpoints and the start/stop ramp setpoints. The modular interface may use the pressure sensor data, the set-point entered by the user, and an internal closed-loop control algorithm to control the sprayer pressure.

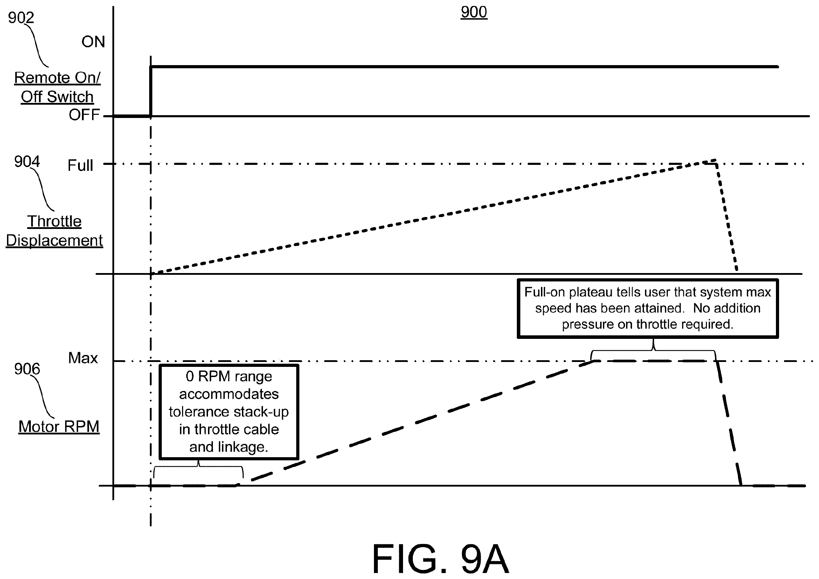

FIG. 9A is a graph 900 illustrating operation of the motor system 600 of FIG. 6 with a concrete screed. The graph 900 also is exemplary for illustrating operation of the motor system 600 of FIG. 6 with a concrete vibrator. While the below discusses the graph 900 in terms of the concrete screed, the discussion applies similarly to the operation of the motor system with a concrete vibrator. The graph 900 illustrates the motor output versus the throttle displacement. As discussed above, the modular interface for the concrete screed may include an on/off switch input and a throttle displacement input. The inputs and the outputs are graphed on the vertical axis. The top input illustrated on the graph is the remote on/off switch input 902. The throttle displacement input 904 is also illustrated on the graph along with the motor RPM output 906, which is received as feedback to the modular interface from the electric motor through the motor control circuit. The throttle input may be via a mechanical cable or electric potentiometer that is connected to the modular interface. The modular interface is programmed with various sensitivities to match the particular throttle characteristics and electric motor speed requirements. After the tool is switched on using the on/off switch input, the user may move the throttle to increase the throttle displacement 904 towards full. The initial 0 RPM range is maintained even as the initial throttle displacement is moved in order to accommodate tolerance stack up in the throttle cable and linkage. The motor RPM 906 increases towards a maximum RPM as the throttle is moved towards full. Once the full-on plateau is reached for the motor RPM, then the maximum speed has been attained and no additional throttle displacement is required. The throttle displacement 904 input and the motor RPM output 906 operate in linear cooperation until the full-on plateau is reached. In the example for the vibratory screed (FIG. 2D), the user may likely not set the motor at full speed. Concrete is delivered at various slump conditions (stiffness), and even when specified can still vary from one truck load to the next. The user often adjusts screed motor speed for optimum screeding for the stiffness of the concrete. This may not be full-on. And this is where the remote ON/OFF is useful to the user. On first pass of the screed, the user can adjust the throttle to optimum speed, screed, and then shut it off with the remote ON/OFF. Additional concrete from the same batch is spread and then the screed is used to make subsequent passes. In this case, the user does not have to once again seek the speed setting best for that batch of concrete since the throttle is left in the pre-determined position. Rather, the user just needs to turn the device on and off with the remote ON/OFF switch.

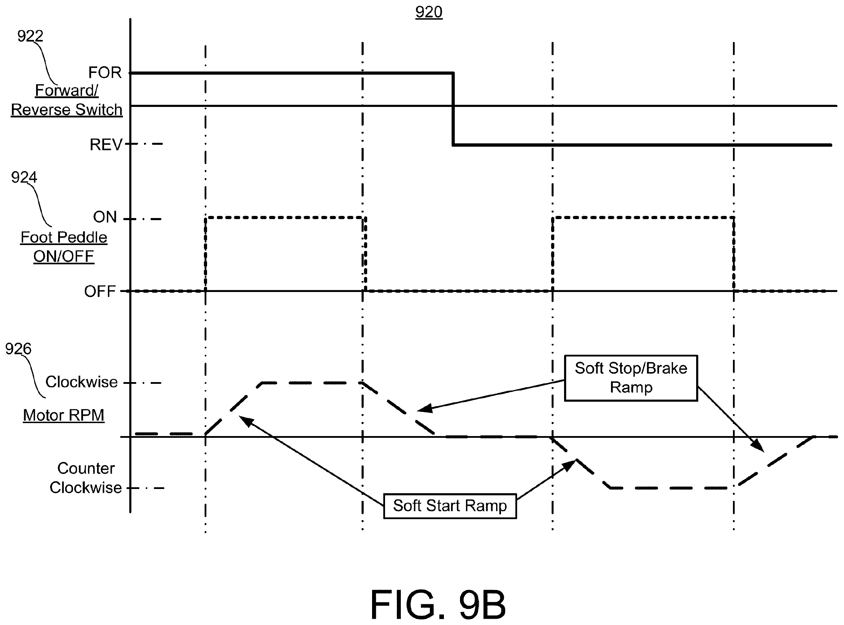

FIG. 9B is a graph 920 illustrating operation of the motor system 600 of FIG. 6 with a drain auger. The graph 920 illustrates motor speed and direction versus the foot pedal on/off switch and the forward/reverse switch. The modular interface for the motor system that is implemented on a drain auger includes the on/off main switch for the electric motor, a foot pedal on/off input, and a forward and reverse switch input. The modular interface receives as output from the motor control circuit the motor RPM. The main on/off input switch is not graphed in this example illustration. The graph illustrates that when the foot pedal on/off input switch 924 is turned on, then the motor RPM 926 is programmed via the modular interface to initiate a soft start. When the forward/reverse 922 switch is in the forward input position, the motor rotates in a clockwise direction. When the motor reaches operational speed after the soft start the motor continues to operate. The modular interface may be programmed with a soft start and a soft stop to accommodate the cable and drum's mass and high inertia for the drain auger. This enables the motor to ramp up to speed and also to slow ramp the brake to avoid torque impulse when attempting to stop the mass of the rotating drum and cable. When the foot pedal on/off input switch 924 is in the moved from the on position to the off position, then the modular interface initiates a soft stop brake as illustrated by the ramp on the motor RPM 926. The motor also may be instructed or powered to slow when torque increases. This is feedback the operator uses to infer when the auger cable has encountered a pipe joint or clog.

When the forward/reverse switch 922 is placed in the reverse input position and the foot pedal on/off input switch 924 is turned from the off position to the on position, then the motor RPM 926 does a soft start in the counterclockwise direction until it reaches the plateau of full motor RPM speed as programmed in the modular interface. When the foot pedal on/off input switch 924 is moved to the off position, the motor RPM 926 does not stop immediately but instead does a soft stop/brake to stop the operation of the motor as programmed in the modular interface.

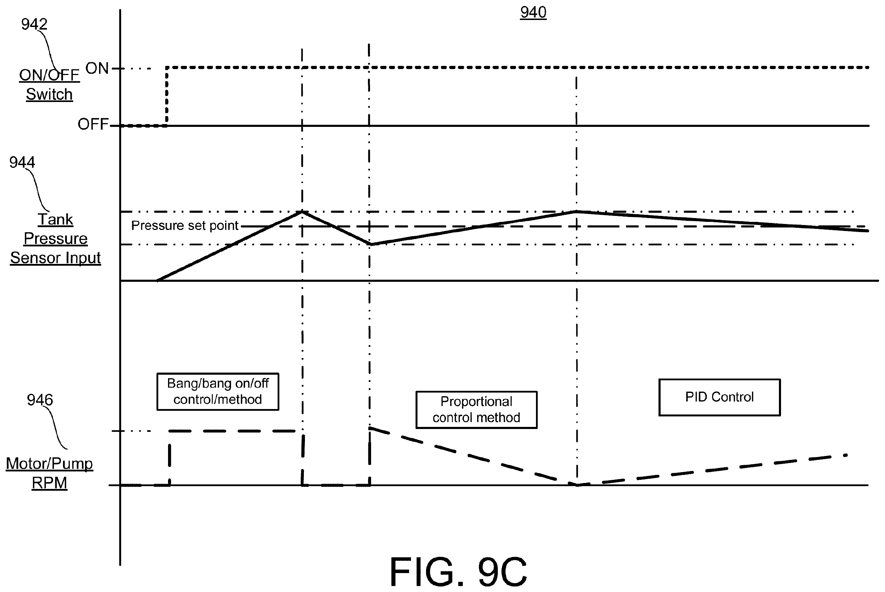

FIG. 9C illustrates a graph 940 of the example operations of the motor system 600 of FIG. 6 for a sprayer control. The graph 940 illustrates the motor and pump RPM 946 versus the tank pressure 944, which is a closed loop control of the tank pressure. The modular interface includes a system on/off switch input 942, a tank pressure sensor input 944 and a dial or other input for pressure setpoint. The modular interface output, which is information received from the sprayer, includes a digital readout for pressure setpoint and real-time pressure and the motor instruction on/off. The modular interface receives the pressure sensor data and the switch on/off input information. The modular interface controls the motor on/off and the pulse width modulation of the motor in order to maintain the tank pressure setpoint. In this manner, the sensor information related to the pressure received by the modular interface enables the modular interface to automatically control and pulse the motor on and off as needed in order to maintain the tank pressure at the setpoint that is programmed in the modular interface.

Referring to the graph 940, the on/off switch input 942 is graphed from the off position to the on position, the tank pressure sensor input 944 is graphed and the motor/pump RPM 946 is graphed. When the on/off switch is moved from the off position to the on position, the motor and pump turn on and operate to increase the tank pressure. As the tank pressure sensor input 944 reaches the pressure setpoint, the sensor feedback is provided to the modular interface, which then turns off the motor. When the tank pressure sensor input goes below the pressure setpoint, then the input to the modular interface causes the motor pump rpm to increase. There are different methods for maintaining the tank pressure setpoint. The first is illustrated by a bang/bang on/off control method where the motor pump rpm is either at 0 or at maximum RPM. Another method is the proportional control method such that when the setpoint goes below the pressure setpoint the motor rpm's start at a maximum and then slowly ramp down as the tank pressure reaches the pressure setpoint. Another method is the proportional-integral-derivative (PID) control method, which uses a control loop feedback mechanism. In the PID control method, a controller continuously calculates an error value as the difference between a desired setpoint and a measured process variable and applies a correction based on proportional, integral, and derivative terms, (sometimes denoted P, I, and D respectively) which give their name to the method type.

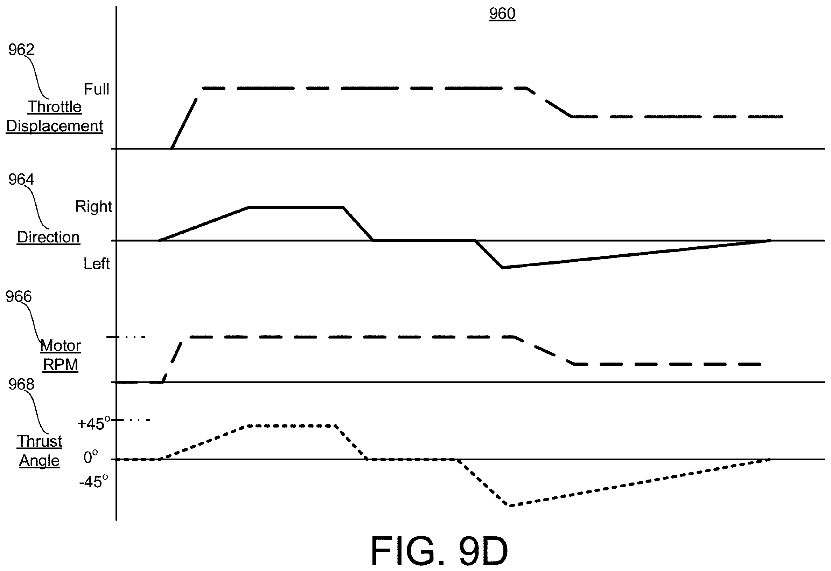

FIG. 9D illustrates a graph 960 the motor system 600 of FIG. 6 attached to a small boat motor. The graph 960 illustrates wired or wireless control of the motor speed with control of auxiliary motor to control direction. The modular interface may receive as inputs the on/off input main switch, which is not illustrated on this graph, a throttle displacement input 962, and a direction input 964. The motor and motor control circuit output the motor pulse width modulation speed 966 and the tool outputs a thrust angle output 968 that is received by the modular interface. The throttle and direction input may be via a wired connection or wireless connection to foot pedals to control the boat motor speed and thrust angle. In this example, the modular interface controls the main motor speed and also provides instruction and power to an auxiliary servomotor to direct the angle of thrust, enabling the boat to turn. Optional inputs may include a digital compass, a Gyro, or GPS to assist in setting and automatically following a course.

As the throttle displacement input 962 is moved from the 0 position to the full position the motor rpm 966 increases until full motor speed plateau is reached. As the direction input 964 is received, the thrust angle 968 is adjusted. When the direction is in the right direction, the thrust angle is put at the 45° angle, where it is maintained until the direction input is moved back to neutral. When the direction input is moved back to neutral, then the thrust angle is put at 0 and the boat would move in a straight direction. When the direction input is moved to the left, then the thrust angle is moved in a -45° direction which causes the boat to turn to the left. As the direction input is moved from the left back to the neutral position, then the thrust angle is correspondingly moved from -45 back to 0°. The direction input may cause the thrust angle to move in a linear amount. In this case, the modular interface is also the conduit for power provided to the auxiliary servo motor. The modular interface may also act as the conditioner and conduit for power to the sensors and to auxiliary devices and peripherals like the servo motor or solenoid valves. This power may come from the battery that powers the motor, but it may also come from an auxiliary battery that may be dedicated to provide power to the peripherals.

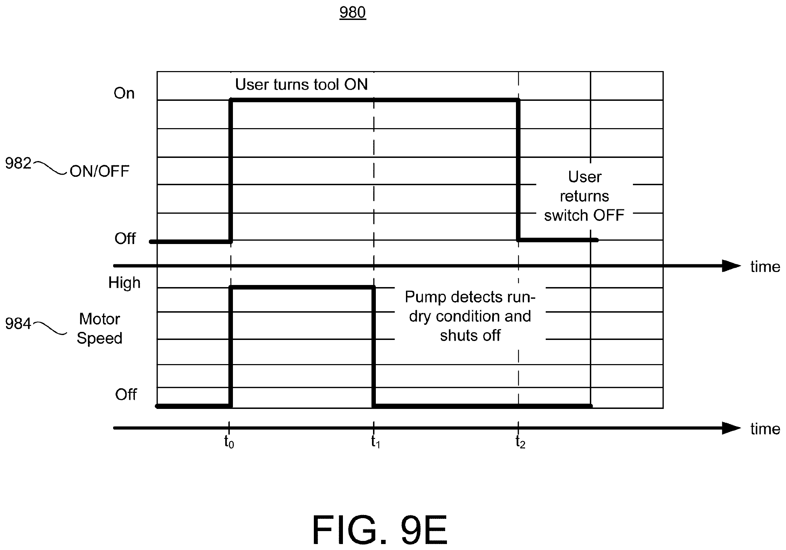

FIG. 9E is a graph 980 illustrating operation of the motor system 600 of FIG. 6 with a pump. The graph 980 illustrates the motor output versus the pump on/off switch and detection of a run-dry condition. A run-dry condition is when water or other liquid being pumped by the pump stops flowing through the pump. The modular interface for the pump may include an on/off switch input. The inputs and the outputs are graphed on the vertical axis. The top input illustrated on the graph is the on/off switch input 982. The motor RMP output 984 (or motor speed) is illustrated on the graph, which is received as feedback to the modular interface from the electric motor through the motor control circuit. The modular interface may be programmed with various sensitivities to match the particular pump characteristics and electric motor speed requirements. After the tool is switched on using the on/off switch input 982, the motor RPM output 984 turns fully on to a maximum RPM and remains at maximum RPM until either the user turns the tool off using the on/off switch input 982 or the pump detects a run-dry condition and shuts off even if the on/off switch input 982 is still in the on position. The pump may detect a run-dry condition in one or more of the following ways. For example, the pump may include a float and sensor. When the float drops to a certain level, the float indicates that the pump is dry and the sensor sends a signal to shut off the motor. Also, for example, the pump may include a pressure sensor that detects a threshold pressure, or when the pump dips below a threshold pressure indicating that the pump is dry, and the pressure sensor sends a signal to shut off the motor. Finally, for example, the pump may include a sensor to detect an amount of current being drawn by the motor. For instance, the pump may include a shunt resistor that detects a change in the current level and/or a current level that indicates that the pump is dry, which causes a signal to be sent to shut off the motor.

Referring to FIG. 10, an example motor system 1000 is illustrated. In this example motor system 1000, the motor system 1000 includes a motor 1020, a battery 1028, a transmission 1024, an output shaft 1016 and a motor control circuit 1022. The motor system 1000 also includes an interface receptacle 1026 that is configured to receive a modular interface 1032. In this example, the motor system 1000 components may function in the same manner as the components of the motor system 600 of FIG. 6, with the exception of the modular interface 1032 and the motor control circuit 1022. In this example, the modular interface 1032 does not include a controller and is not pre-programmed with motor performance or tool set point information. The modular interface acts only as a pass-through for inputs and outputs to the motor and/or to the tool. Thus, the modular interface includes inputs 1044 and outputs 1046, but does not include other information. Instead, the motor control circuit 1022 may include a controller 1080 and a memory 1082. The memory 1082 may be pre-programmed with instructions related to motor performance and tool set point information that is operated on by the controller 1080 in response to the inputs 1044 from the modular interface 1032. The memory 1082 may be programmed with instructions as part of the motor assembly process and there may be different programs or instruction sets downloaded to create different motor performance packages to deliver specific performance for each tool that the motor assembly 1000 will be attached to. Alternatively, the motor controller 1080 may be loaded with several alternative instructions sets and the modular interface may be equipped with dip switches that instruct the motor controller 1080 as to which instructions sets by which to operate.

Referring to FIG. 11 and as discussed above, the motor system 1100 may be configured to communicate wirelessly with another device, such as a mobile computing device 1190 over a wireless network 1185. The motor system 1100 may include the same components and functionality as the motor system 600 of FIG. 6. The motor system 1100 includes an electric motor 1120, a motor control circuit 1122, a transmission 1124, an output shaft 1116, a battery 1128, an interface receptacle 1126 and a modular interface 1132. The modular interface 1132 includes a controller 1140, a memory 1142, inputs 1144, outputs 1146, a display 1148 and a communication module 1150. The communication module 1150 is configured to enable the modular interface to communicate with the mobile electronic device 1190 over the network 1185. The modular interface 1132, through the communication module 1150, may receive input from the mobile electronic device 1190 and provide output information to the mobile electronic device 1190. For example, a user may use an application on the mobile electronic device 1190 that is programmed to provide input to the modular interface 1132 in order to operate different aspects of the motor system 1100 and/or provide or adjust a set point for motor performance. The application on the electronic device 1190 also may receive output information from the modular interface 1132 and display that information on the application 1190 through the application running on the electronic device 1190.

In one implementation, the wireless interconnection enables several motor systems to be daisy chained together. For instance, in an application that uses multiple configurable motor systems as part of an overall system such as in a mobile scaffolding application, multiple different configurable motor systems may be connected to power individual axels of the scaffolding system. A mobile communication device may communicate with each of the modular interfaces on each of the motor systems to control and coordinate operation of the mobile scaffolding system. In another example of the benefit of daisy chain interconnection, multiple configurable motor systems may drive multiple lifts or jacks. These lifts may be placed under an existing structure, equipment, or under a beam or lintel to be installed. A mobile communication device may communicate with each modular interface on each motor system to control and coordinate the level lifting. There are also several ways to achieve this orchestrated control of multiple jacks. As noted above, all modular interfaces may communicate wirelessly to a single mobile communication device. Or all module interfaces may communicate with each other and a single modular interface may act as the user interface providing a touch pad or pendant for the user to control all lifts in unison.

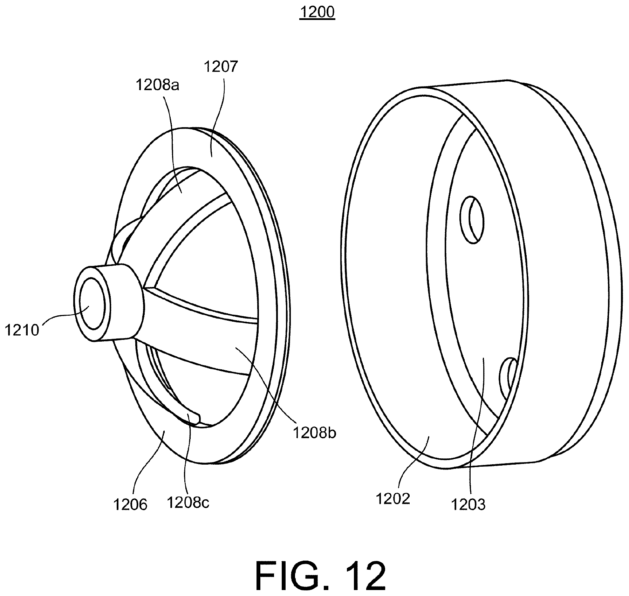

FIGS. 12-17 illustrate different example clutch adapters for replacing one or more components of the clutches (e.g., centrifugal clutches) on the tools having the internal combustion engines. For example, these clutch adapter components would be integrated with a clutch cup that is part of an existing centrifugal clutch located on the particular tool and that connects to the output shaft of the configurable motor system, such as output shaft 616 of FIG. 6 and output shaft 716 of FIG. 7A. In some implementations, the clutch adapters would continuously engage the clutch cup using friction or other means because in with the electric motor of the configurable motor system the tool can simply be turned on and off by turning the motor on and off without regard to engaging or disengaging the clutch on the tool. When the configurable motor system is used to replace the internal combustion engine on a tool, the clutch adapter may be used to replace components of the clutch on the tool while still leaving one or more components, such as the clutch cup and clutch shoes, of the existing clutch in place.

FIG. 12 is an exploded perspective view of an example clutch adapter for use with the configurable motor system. FIG. 12 illustrates a clutch adapter 1200 that includes a pressure plate 1206 that replaces the spring mechanism and clutch shoes on a centrifugal clutch to engage the clutch cup 1202. The pressure plate 1206 includes a ring 1207 and spring legs 1208a-d with a friction material 1209 on the back side of the ring 1207. The axial motion and rotation of the pressure plate 1206 by the motor shaft through the opening 1210 of the pressure plate 1206 forces the spring legs 1208a-d to press the ring 1207 having the friction material 1209 to engage a back face 1203 of the clutch cup 1202. In this manner, the pressure plate 1206 remains always engaged with the clutch cup 1202.

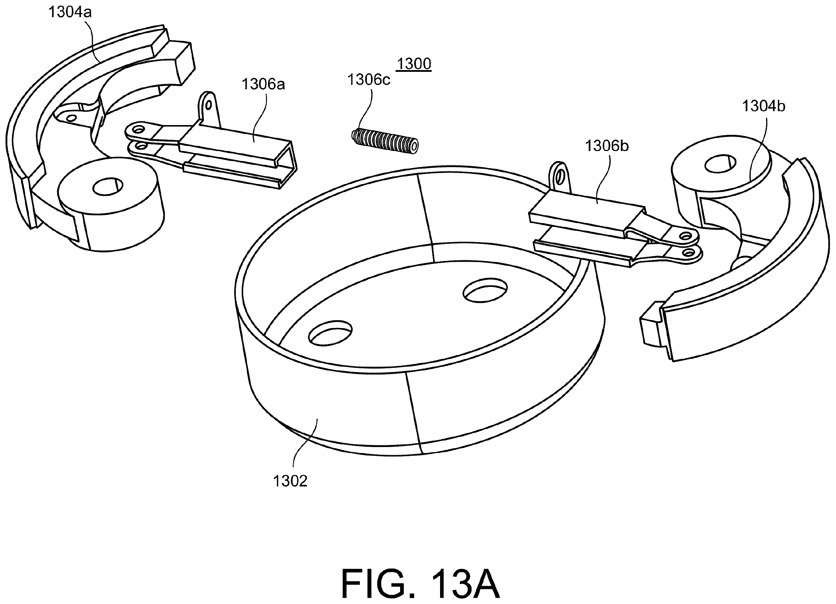

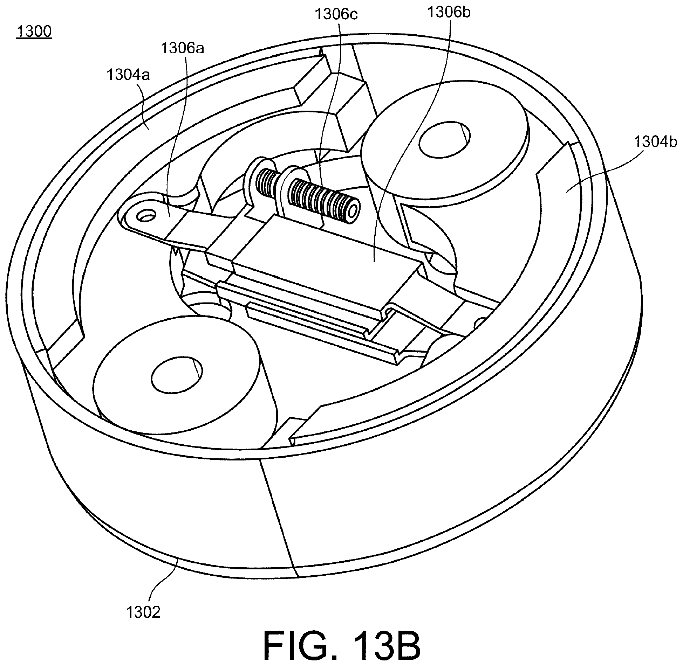

FIG. 13A is an exploded perspective view of an example clutch adapter for use with the configurable motor system. FIG. 13B is an assembled perspective view of the example clutch adapter of FIG. 13A. FIGS. 13A and 13B illustrate a clutch adapter 1300 that includes a jack screw mechanism 1306a, 1306b and 1306c that replaces the spring mechanism on a centrifugal clutch to force the clutch shoes 1304a and 1304b to engage the clutch cup 1302. The jack screw mechanism 1306a, 1306b and 1306c works by manually turning the screw 1306c to force the clutch shoes 1304a and 1304b out to permanently engage the clutch cup 1302. An access through the housing of the configurable motor system may be provided to access the screw 1306c. The clutch shoes 1304a and 1304b may be disengaged from the clutch cup 1302 by reversing the screw 1306c.

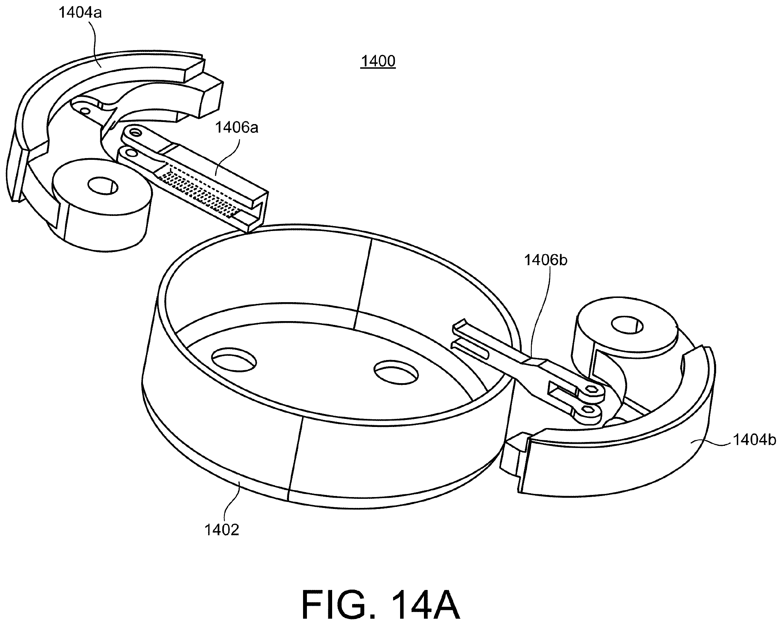

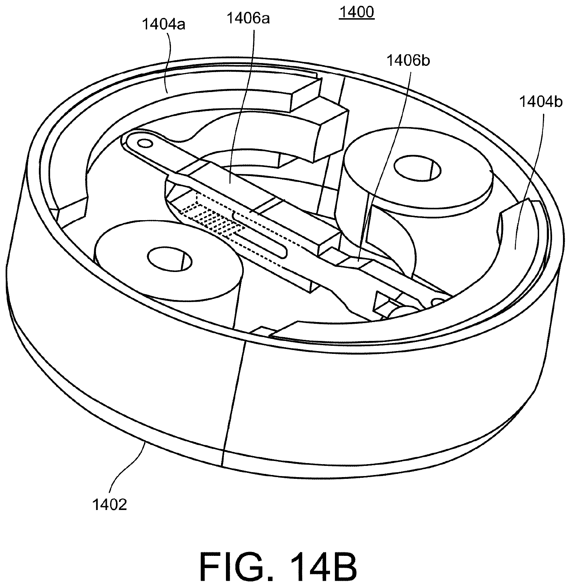

FIG. 14A is an exploded perspective view of an example clutch adapter for use with the configurable motor system. FIG. 14B is an assembled perspective view of the example clutch adapter of FIG. 14A. FIGS. 14A and 14B illustrate a clutch adapter 1400 that includes a ratchet mechanism 1406a and 1406b that replaces the spring mechanism on a centrifugal clutch to force the clutch shoes 1404a and 1404b to engage the clutch cup 1402. The first time the tool is used with the ratchet mechanism 1406a and 1406b, the force of the centrifugal motion force the clutch shoes 1404a and 1404b out to engage the clutch cup 1402. The ratchet mechanism 1406a and 1406b ratchets out with the same force to hold the clutch shoes 1404a and 1404b permanently engaged with the clutch cup 1402 because the ratchet mechanism only works to move in one direction towards the clutch cup, but cannot be moved in the opposite direction.

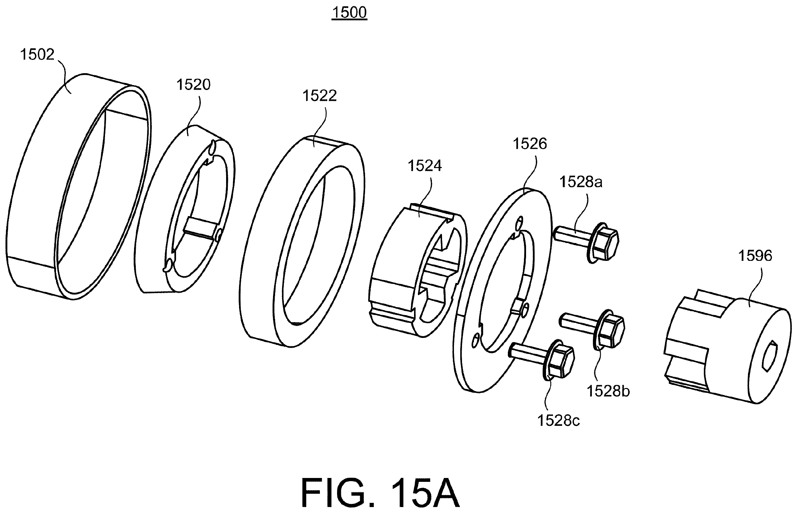

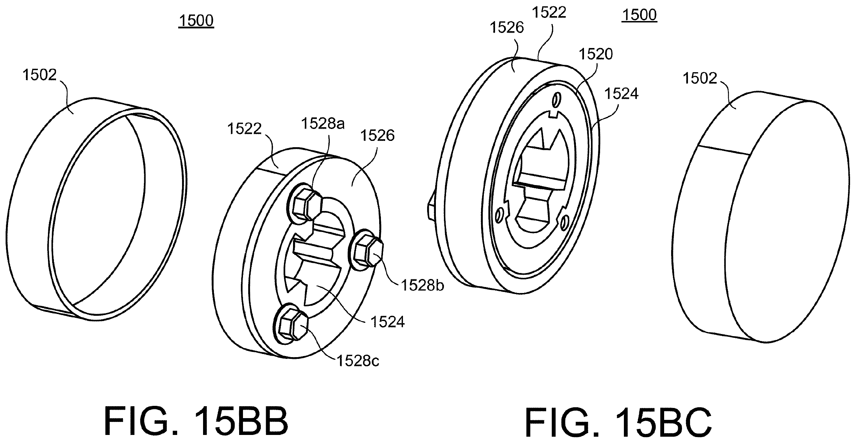

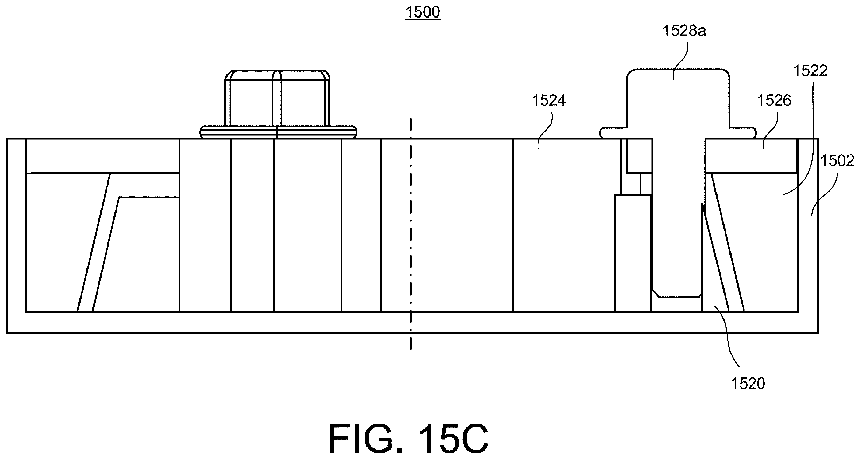

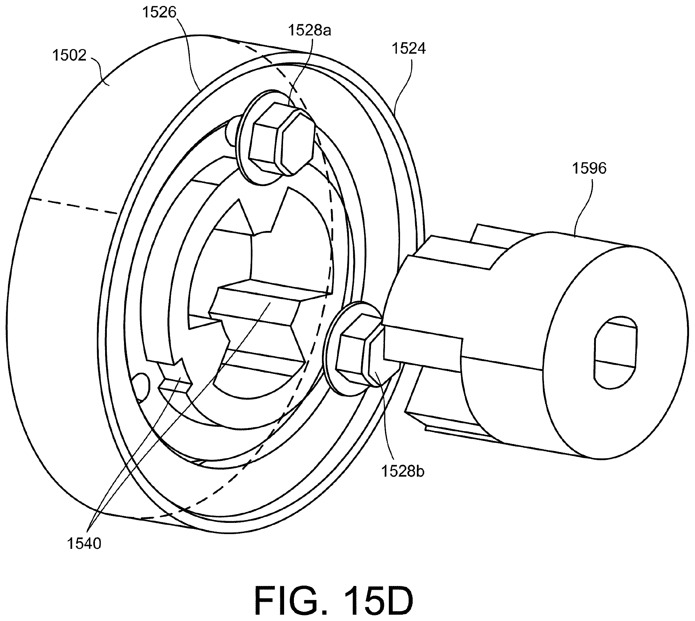

FIG. 15A is an exploded perspective view of an example clutch adapter for use with the configurable motor system. FIG. 15BB is an assembled first perspective view of the example clutch adapter of FIG. 15A. FIG. 15BC is an assembled second perspective view of the example clutch adapter of FIG. 15A. FIG. 15C is side cross section view of the example assembled clutch adapter of FIG. 15BB. FIG. 15D is a partially assembled, partially exploded perspective view of the example clutch adapter of FIG. 15A. FIGS. 15A-15D illustrate a clutch adapter 1500. The clutch adapter 1500 includes a taper ring 1520, a rubber ring 1522, an inner hub 1524, a washer 1526, and hex bolts 1528a-c. As the hex bolts 1528a-c are tightened, the taper ring 1520 slides up the inner hub 1524 and contacts the rubber ring 1522. At the hex bolts 1528a-c are continued to be tightened, the rubber ring 1522 is forced outward and creates a high friction connection with the clutch cup 1502. The clutch adapter 1500 connects to the coupler 1596, where the coupler 1596 is the same or similar to the coupler 796 of FIG. 7E. Torque is transmitted from the coupler 1596 to the inner hub 1524 via the connection 1540 illustrated in FIG. 15D. The torque is then transmitted from the inner hub 1524 to the taper ring 1520 via the connection 1540.

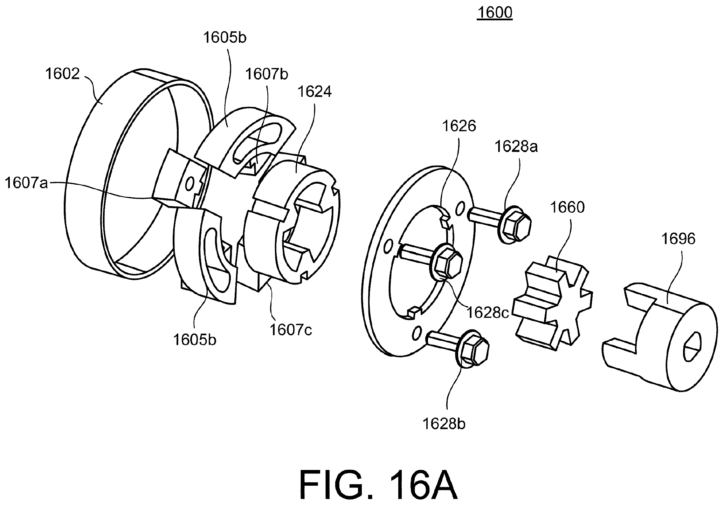

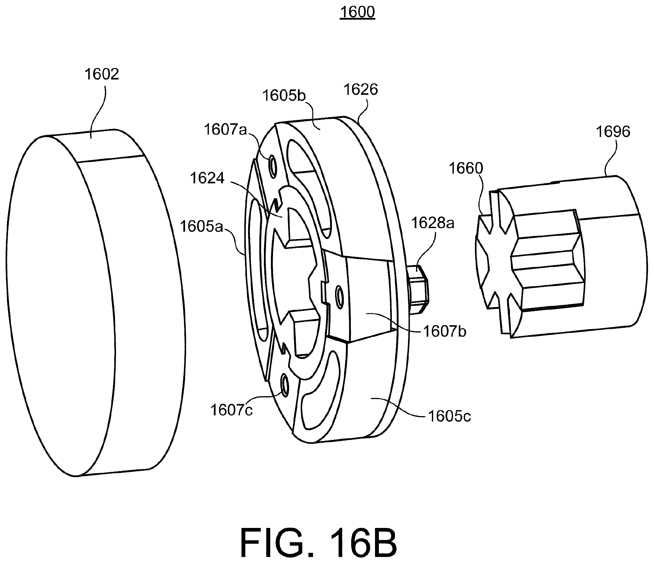

FIG. 16A is an exploded perspective view of an example clutch adapter for use with the configurable motor system. FIG. 16B is a partially assembled, partially exploded perspective view of the example clutch adapter of FIG. 16A. FIGS. 16A and 16B illustrate a clutch adapter 1600. The clutch adapter 1600 includes shoes 1605a-c, wedges 1607a-c, an inner hub 1624, a washer 1626, hex bolts 1628a-c and a star gear 1660. The star gear 1660 mates with the coupler 1696, where the coupler 1696 is the same or similar to the coupler 796 of FIG. 7E. As the hex bolts 1628a-c are tightened, the shoes 1605a-c are forced outward by the wedges 1607a-c to create a high friction connection with the clutch cup 1502. Torque is transmitted from the coupler 1696 to the star gear 1660.

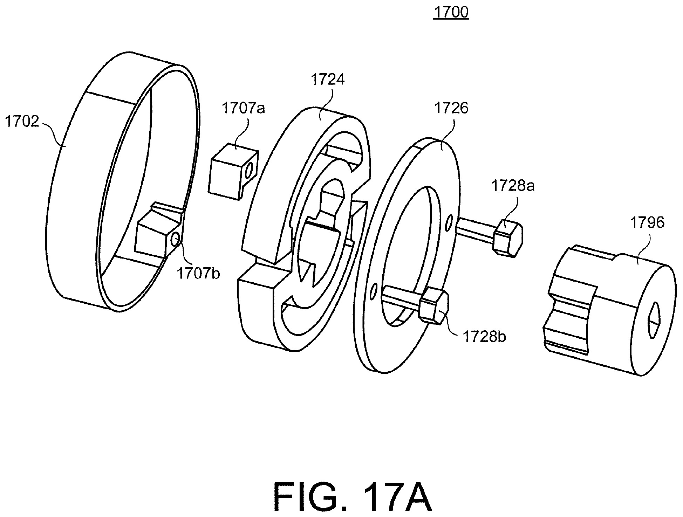

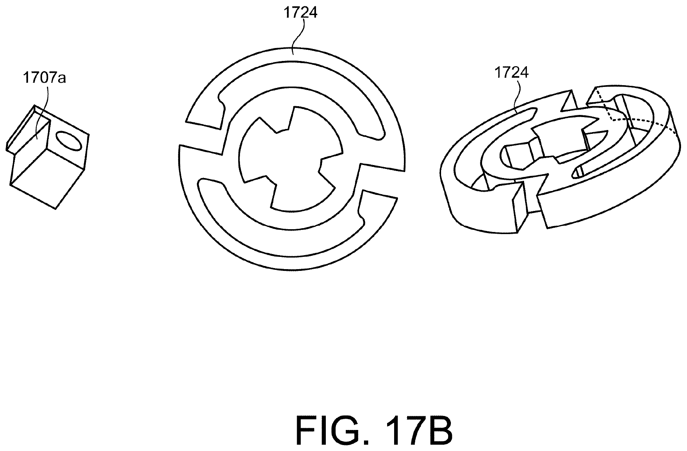

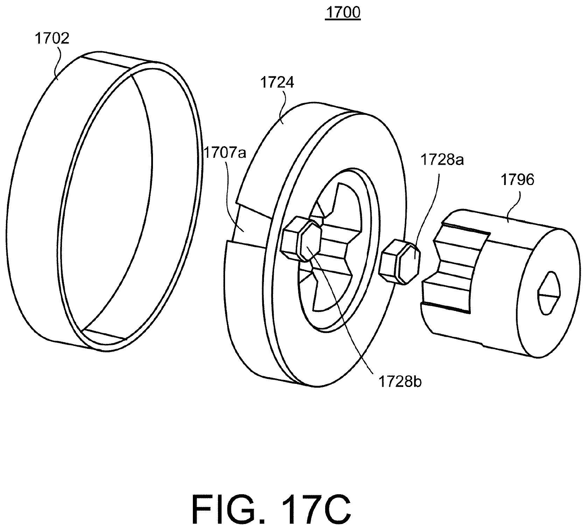

FIG. 17A is an exploded perspective view of an example clutch adapter for use with the configurable motor system. FIG. 17B is a perspective view of components of the example clutch adapter of FIG. 17A. FIG. 17C is a partially assembled, partially exploded perspective view of the example clutch adapter of FIG. 17A. FIGS. 17A-C illustrate a clutch adapter 1700. The clutch adapter 1700 includes wedges 1707a-b, an inner hub 1724, a washer 1726, and hex bolts 1728a-b. The inner hub 1724 mates with the coupler 1796, where the coupler 1796 is the same or similar to the coupler 796 of FIG. 7E. As the hex bolts 1728a-b are tightened, the clutch adapter 1700 is held together and as they are continued to be tightened they fix the inner hub 1724 to create a high friction connection with the clutch cup 1702. Torque is transmitted from the coupler 1796 to the inner hub 1724.

The motor provided in any of the example configurable motor systems described above may have various motor wind characteristics, which may vary based on a particular tool application. For example, in the case of a concrete vibrator, the motor wind characteristics may include a 25mm stack stator having 31 turns of 21.5 AWG wire. For a concrete screed, the motor wind characteristics may include a 25mm stack stator having 37 turns of 22 AWG wire. In each case, the motor may be a delta parallel wind configuration with 42H magnets. It is understood that these motor wind characteristics are not meant to be limiting but provided as example characteristics. Other motor wind characteristics are possible.

The configurable motor systems discussed above also may be used with other tools that were not mentioned above. For example, the configurable motor systems may be used with a concrete core drill system. The modular interface component of the configurable motor system may connect the core drill motor to a second motor (e.g., a dumb motor), which would allow automatic advancement of the drill into the material in an optimized fashion, based on the current draw of the core drill motor. This would eliminate the need for the user to attend and operate the drill, and instead be free to do other tasks.

Other tools applications are possible where controlling two motors in a synchronized fashion would be advantageous. For example, an outboard trolling motor for use on a boat may be one example, where a second motor could adjust the angle of the trolling motor to steer the boat and hold a particular direction based on the user's input. Other applications are also possible.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications may be made to the exemplary implementations described above. These and other implementations are within the scope of the following claims.

## Claims

1. A configurable motor system comprising:
a housing having an electrical power input and an interface receptacle;
an electric motor received in the housing;
an output shaft rotationally driven by the electric motor;
a motor control circuit received in the housing and configured to control power delivery from the electrical power input to the electric motor; and
a modular interface in communication with the motor control circuit through the interface receptacle,
wherein the modular interface is configured to receive one or more user inputs and to direct the motor control circuit to control power delivery to the electric motor, the modular interface comprising a variable speed input configured to adjust the speed of the motor in response to a user input.

2. The configurable motor system of claim 1, wherein the modular interface is coupled to the tool to which the motor system is attached.

3. The configurable motor system of claim 1 or claim 2, wherein the modular interface is in communication with the motor control circuit through a wired connection with the interface receptacle.

4. The configurable motor system of claim 1 or claim 2, wherein the modular interface is in communication with the motor control circuit through a wireless connection with the interface receptacle.

5. The configurable motor system of any preceding claim, wherein the modular interface includes a user interface.

6. The configurable motor system of any preceding claim, wherein the modular interface includes control electronics configured to control the motor control circuit.

7. The configurable motor system of any preceding claim, wherein the modular interface provides direct input to the motor control circuit.

8. The configurable motor system of any preceding claim, wherein the variable speed input includes a throttle control input configured to be coupled to a throttle cable of a tool.

9. The configurable motor system of any of claims 1-7, wherein the variable speed input includes a speed control dial configured to be actuated by a user.

10. The configurable motor system of any preceding claim, wherein the modular interface includes a display configured to convey information about tool operation to a user.

11. The configurable motor system of any preceding claim, wherein the power input includes a battery receptacle configured to receive a battery.

12. The configurable motor system of any preceding claim, further comprising a mounting bracket coupled to the housing, wherein the mounting bracket includes substantially a same configuration as a mount of an internal combustion engine that the motor system is intended to replace.

13. The configurable motor system of any preceding claim, wherein the variable speed input comprises a potentiometer.

14. The configurable motor system of any preceding claim, wherein the modular interface is configured to direct the motor control circuit to control power delivery to the motor based on the user input and based on pre-programmed instructions corresponding to a tool to which the motor system is attached.

15. A power tool comprising the configurable motor system of any preceding claim.
